(19)

Europäisches Patentamt
European Patent Office
Office européen des brevets

(11) **EP 2 162 216 B1**

(12) **EUROPÄISCHE PATENTSCHRIFT**

(45) Veröffentlichungstag und Bekanntmachung des Hinweises auf die Patenterteilung:
**06.04.2011   Patentblatt 2011/14**

(21) Anmeldenummer: **08760887.3**

(22) Anmeldetag: **12.06.2008**

(51) Int Cl.:
**B01J 37/00** *(2006.01)*      **B07B 1/46** *(2006.01)*

(86) Internationale Anmeldenummer:
**PCT/EP2008/057341**

(87) Internationale Veröffentlichungsnummer:
**WO 2008/152079 (18.12.2008 Gazette 2008/51)**

(54) **VERFAHREN ZUM BESCHICKEN EINES REAKTORS MIT EINEM KATALYSATORFESTBETT, DAS WENIGSTENS RINGFÖRMIGE KATALYSATORFORMKÖRPER K UMFASST**

METHOD FOR LOADING A REACTOR WITH A FIXED CATALYST BED WHICH COMPRISES AT LEAST ANNULAR-SHAPED CATALYST BODIES K

PROCÉDÉ POUR ÉQUIPER UN RÉACTEUR D'UN LIT FIXE DE CATALYSEUR QUI COMPREND AU MOINS DES CORPS MOULÉS DE CATALYSEUR ANNULAIRES K

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.06.2007   DE 102007028332**
**15.06.2007   US 944208 P**

(43) Veröffentlichungstag der Anmeldung:
**17.03.2010   Patentblatt 2010/11**

(73) Patentinhaber: **BASF SE**
**67056 Ludwigshafen (DE)**

(72) Erfinder:
• **RAICHLE, Andreas**
**67063 Ludwigshafen (DE)**

• **BORCHERT, Holger**
**67591 Offstein (DE)**
• **MÜLLER-ENGEL, Klaus Joachim**
**76297 Stutensee (DE)**
• **WILMER, Hagen**
**67071 Ludwigshafen (DE)**
• **DOBNER, Cornelia**
**67071 Ludwigshafen (DE)**
• **CREMER, Ulrich**
**68161 Mannheim (DE)**

(56) Entgegenhaltungen:
**EP-A- 1 726 358     US-A1- 2004 225 138**

**Beschreibung**

Vorliegende Erfindung betrifft ein Verfahren zum Beschicken eines Reaktors mit einem Katalysatorfestbett, das wenigstens Katalysatorformkörper K umfasst, deren geometrische Form diejenige eines Ringes mit dem Außendurchmesser A, dem Innendurchmesser I und der Höhe B mit der Maßgabe $A \geq B$ ist, bei dem man vor der Beschickung bei der Herstellung der Katalysatorformkörper K entstandene Bruchstücke durch ein Verfahren der Siebung wenigstens teilweise als Siebdurchgang von einem Katalysatorformkörper K enthaltenden Siebrückstand abtrennt sowie anschließend von dem Siebrückstand zum Beschicken des Katalysatorfestbetts einsetzt und dabei das Verfahren der Siebung mit Hilfe eines Siebes durchführt, das Sieböffnungen aufweist, deren geschlossene Umrisslinie jeweils wenigstens zwei geradlinige Abschnitte aufweist, die sich im Abstand C über wenigstens eine Länge L wie zwei parallele Seiten eines Rechtecks mit den Seitenlängen L und C mit der Maßgabe gegenüberstehen, dass jede durch einen auf der Umrisslinie einer Sieböffnung liegenden Umrisslinienpunkt P verlaufende Parallele zur gedachten Rechteckseite mit der Seitenlänge C keinen weiteren auf der Umrisslinie liegenden Punkt aufweist, dessen Abstand zum Umrisslinienpunkt $P > C$ beträgt.

Verfahren zur Durchführung heterogen katalysierter Gasphasenreaktionen im in einem Reaktor befindlichen Katalysatorfestbett sind ebenso bekannt wie dafür geeignete Reaktoren. Im Prinzip handelt es sich bei den Reaktoren in der Regel um indirekte Wärmeaustauscher. In diesen trennt eine Trennwand den Reaktionsraum vom Wärmeübertragungsraum. Im Reaktionsraum befindet sich normalerweise das Katalysatorfestbett, durch das das Reaktionsgasgemisch geführt wird. Während der Verweilzeit der Reaktanden an der Katalysatoroberfläche setzen sich die Reaktanden um. Durch den Wärmeübertragungsraum wird üblicherweise ein fluides Wärmeaustauschmittel geführt, dem die Aufgabe zukommt, durch die Trennwand hindurch die benötigte Reaktionswärme zuzuführen (z.B. im Fall von endothermen heterogen katalysierten Gasphasenreaktionen) oder die bei der Reaktion frei werdende Reaktionswärme abzuführen (z.B. im Fall von exothermen heterogen katalysierten Gasphasenreaktionen). Als fluide Wärmeaustauschmittel kommen dabei sowohl Gase als auch Flüssigkeiten in Betracht. Beispiele für solche Reaktoren sind Rohrbündelreaktoren (vgl. z.B. DE-A 4 431 949, DE-A 2 903 582, EP-A 700 714, DE-PS 2 830 765) sowie Thermoblechplattenreaktoren (vgl. z.B. DE-A 102 004 017 151, DE-A 102 004 017 150, DE-A 10 361 515) oder Reaktoren mit Wärmetauscherplatten gemäß der DE-A 10 031 347.

Bei den Rohrbündelreaktoren befindet sich das Katalysatorfestbett in der Regel in den Reaktionsrohren und das Wärmeaustauschmittel wird im die Reaktionsrohre umgebenden Raum geführt. Bei den Thermoblechplattenreaktoren wird das Wärmeaustauschmittel durch besonders gestaltete Thermoblechplatten geführt und das Katalysatorfestbett befindet sich in den von den Thermoblechplatten begrenzten Reaktionsräumen.

Selbstverständlich können heterogen katalysierte Gasphasenreaktionen aber grundsätzlich auch in gegen ihre äußere Umgebung thermisch isolierten Reaktoren ("adiabate Reaktoren") durchgeführt werden (vgl. z.B. DE-A 10 2006 029 790, sowie DE-A 10 2006 017 623).

Ganz generell wird bei heterogen katalysierten Gasphasenreaktionen versucht, den zum Fördern des Reaktionsgases erforderlichen Energieaufwand möglichst niedrig zu halten. Als eine Maßnahme zur Erreichung dieser Zielsetzung werden bevorzugt ringförmige Katalysatorformkörper zur Gestaltung des Katalysatorfestbetts mitverwendet, da diese beim Durchgang des Reaktionsgases durch das Katalysatorfestbett einen besonders geringen Druckverlust bedingen (vgl. z.B. WO 2005/03039). Ein weiterer Vorteil ringförmiger Katalysatorformkörper besteht normalerweise in verringerten Diffusionswegen und daraus resultierend in vielen Fällen in einer verbesserten Zielproduktausbeute.

Nachteilig an ringförmigen Katalysatoren ist jedoch, dass sie eine vergleichsweise erhöhte Bruchempfindlichkeit aufweisen. Im Rahmen ihrer Herstellung kommt es daher in gewissem Umfang normalerweise immer zur Ausbildung von gebrochenen Katalysatorformkörpern (von gebrochenen bzw. zerbrochenen Katalysatorringen), weshalb die ringförmigen Katalysatorformkörper in der Regel im Gemisch mit Bruchstücken solcher Katalysatorformkörper hergestellt werden (bzw. als ein solches Gemisch anfallen). Im einzelnen können solche Bruchstücke unterschiedlichste Geometrien und Körnungen (Feinheitsgrade) aufweisen. Werden zur Erzeugung eines Katalysatorfestbetts nun unmittelbar vorgenannte Gemische verwendet, so erwachsen dabei Katalysatorfestbetten, in denen die bei alleiniger Verwendung von intakten ringförmigen Katalysatorformkörpern sich in der Schüttung normalerweise ausbildenden Hohlräume gegebenenfalls mit solchen Bruchstücken gefüllt (verstopft) sind.

Solchermaßen eine erhöhte Packungsdichte aufweisende Katalysatorfestbetten bedingen aber bei ihrer Durchströmung mit Reaktionsgas in natürlicher Weise einen erhöhten Druckverlust.

Die US-B 7,147,011 empfiehlt als Abhilfe für das vorbeschriebene Problem ein Verfahren zum Beschicken eines Reaktors mit einem Katalysatorfestbett, das ringförmige Katalysatorformkörper umfasst, bei dem man vor der Beschickung bei der Herstellung der ringförmigen Katalysatorformkörper entstandene Bruchstücke durch ein Verfahren der Siebung als Siebdurchgang vollständig von dem aus den ringförmigen Katalysatorformkörpern gebildeten Siebrückstand abtrennt und erst danach den Siebrückstand zum Beschicken des Katalysatorfestbetts einsetzt.

Dabei empfiehlt die US-B 7,147,011 im Fall von ringförmigen Katalysatorformkörpern mit einem Außendurchmesser A und einer Länge (Höhe) B, wobei $A > B$ ist, die Verwendung von Sieben, deren Öffnungen eine Länge L und eine Maschenweite C aufweisen, die die Relationen $A > C > B$ und $L \geq C$ erfüllen, wobei die US-A 7,147,011 offen lässt, was der Begriff der Maschenweite C sowie der Länge L im Fall einer beliebig geformten Sieböffnung sein soll. Vielmehr führt die US-B 7,147,011 lediglich aus, dass es sich im Fall von rechteckigen Sieböffnungen bei C und L um die Seitenlängen des Rechteckes handelt.

Nachteilig an der in der US-B 7,147,011 empfohlenen Verfahrensweise ist jedoch, dass als Siebrückstand (auch als "Überkorn" bezeichnet) im wesentlichen nur unbeschädigte ringförmige Katalysatorformkörper verbleiben, während der Siebdurchgang (auch als "Unterkorn" bezeichnet) nicht nur feinkörnige sondern auch vergleichsweise grobkörnige Bruchstücke sowie gegebenenfalls unbeschädigte Katalysatorringe umfasst. D.h., Zielsetzung der US-B 7,147,011 ist die Abtrennung aller Katalysatorbruchstücke.

Dadurch ist der bei der in der US-B 7,147,011 empfohlenen Verfahrensweise auf den Siebdurchgang entfallende Massenanteil vergleichsweise groß, was vor dem Hintergrund knapper werdender Rohstoffressourcen sowie steigender Rohstoffpreise von Nachteil ist, da der Siebdurchgang normalerweise entsorgt oder vergleichsweise aufwändig aufgearbeitet werden muss. Dies um so mehr vor dem Hintergrund, als vergleichsweise grobe Katalysatorbruchstücke lediglich in vergleichsweise geringem Umfang zur beschriebenen Druckverlustzunahme beitragen, während feinteilige Katalysatorbruchstücke dazu überproportional beitragen. Die Richtigkeit des Vorgenannten wird besonders augenfällig, wenn man berücksichtigt, dass das Katalysatorfestbett in der Mehrzahl aller Fälle nicht nur aus katalytisch aktiven Formkörpern besteht, sondern in der Regel aus Gemischen, die sowohl katalytisch aktive Formkörper als auch inerte Verdünnungsformkörper umfassen. Inert heißt hier in der Regel, dass wenn das Reaktionsgasgemisch unter den Reaktionsbedingungen über eine nur aus Verdünnungsformkörpern bestehende Beschickung des Reaktors (d.h., durch ein entsprechendes, nur aus inerten Formkörpern bestehendes Festbett) geführt wird, der Umsatz der Reaktanden, bezogen auf einen einmaligen Durchgang des Reaktionsgases durch das Festbett, $\leq 5$ mol-%, meist $\leq 2$ mol-%, beträgt. Derartige inerte Verdünnungsformkörper weisen darüber hinaus üblicherweise eine erhöhte Bruchfestigkeit auf und sind im Handel normalerweise frei von Bruchstücken käuflich zu erwerben.

Damit bestand die Aufgabe der vorliegenden Erfindung darin, ein Verfahren zum Beschicken eines Reaktors mit einem Katalysatorfestbett, das wenigstens Katalysatorformkörper K umfasst, deren geometrische Form diejenige eines Ringes mit dem Außendurchmesser A, dem Innendurchmesser I und der Länge (Höhe) B mit der Maßgabe $A \geq B$ ist, zur Verfügung zu stellen, bei dem man vor der Beschickung von den bei der Herstellung der Katalysatorformkörper entstandenen Bruchstücken durch ein Verfahren der Siebung in erster Linie die feinteiligen (bis zum Katalysatorstaub) Bruchstücke als Siebdurchgang von einem Katalysatorformkörper K enthaltenden Siebrückstand abtrennt sowie anschließend von dem Siebrückstand zum Beschicken des Katalysatorfestbetts einsetzt.

Als Lösung dieser Aufgabe wird in der vorliegenden Erfindung ein Verfahren zum Beschicken eines Reaktors mit einem Katalysatorfestbett, das wenigstens Katalysatorformkörper K umfasst, deren geometrische Form diejenige eines Ringes mit dem Außendurchmesser A, dem Innendurchmesser I und der Höhe B mit der Maßgabe $A \geq B$ ist, bei dem man vor der Beschickung bei der Herstellung der Katalysatorformkörper K entstandene (Katalysator)-Bruchstücke (z. B. bei der thermischen Behandlung von ringförmigen Grünlingen bei der Herstellung von ringförmigen Multielementvollkatalysatoren K entstandene (Katalysator)-Bruchstücke) durch ein Verfahren der Siebung wenigstens teilweise als Siebdurchgang von einem Katalysatorformkörper K enthaltenden Siebrückstand abtrennt sowie anschließend von dem Siebrückstand zum Beschicken des Katalysatorfestbetts einsetzt und dabei das Verfahren der Siebung mit Hilfe eines Siebes durchführt, das Sieböffnungen aufweist, deren geschlossene Umrisslinie jeweils wenigstens zwei geradlinige Abschnitte aufweist, die sich im Abstand C über wenigstens eine Länge L wie zwei parallele Seiten eines Rechtecks mit den Seitenlängen L und C mit der Maßgabe gegenüberstehen, dass jede durch einen auf der Umrisslinie einer Sieböffnung liegenden Umrisslinienpunkt P verlaufende Parallele zur gedachten Rechteckseite mit der Seitenlänge C keinen weiteren auf der Umrisslinie liegenden Punkt aufweist, dessen Abstand zum Umrisslinienpunkt $P > C$ beträgt (größer als C ist), zur Verfügung gestellt, das dadurch gekennzeichnet ist, dass beim Verfahren der Siebung die Relationen I,

$$L > A \geq B > C \geq (A\text{-}I)/2 \qquad\qquad (I),$$

erfüllt sind.

Erfindungsgemäß bevorzugt sind beim erfindungsgemäßen Verfahren die Relationen II,

$$L > A \geq B > C \geq B/2 \geq (A\text{-}I)/2 \qquad\qquad (II),$$

.

erfüllt.

Erfindungsgemäß ganz besonders bevorzugt sind beim erfindungsgemäßen Verfahren die Relationen III,

$$L > A \geq B > 0,9B \geq C \geq B/2 \geq (A-l)/2 \qquad (III),$$

erfüllt.

Noch besser sind beim erfindungsgemäßen Verfahren die Relationen IV,

$$L > A \geq B > 0,9B > C > B/2 \geq (A-l)/2 \qquad (IV),$$

erfüllt.

Erfindungsgemäß ganz besonders günstig sind beim erfindungsgemäßen Verfahren die Relationen V,

$$L > A \geq B > 0,86B \geq C > B/2 \geq (A-l)/2 \qquad (V),$$

erfüllt.

Selbstverständlich liegt ein erfindungsgemäßes Verfahren auch dann vor, wenn eine der folgenden Relationen erfüllt ist:

$$(VI): \qquad L > A \geq B > 0,9 \, B \geq C \geq (A-l)/2;$$

oder

$$(VII): \qquad L > A \geq B > 0,9 \, B > C \geq (A-l)/2;$$

oder

$$(VIII): \qquad L > A \geq B > 0,86 \, B \geq C \geq (A-l)/2;$$

oder

$$(IX): \qquad L > A \geq B > 0,86 \, B > C \geq (A-l)/2.$$

Mit ganz besonderem Vorteil ist L sowohl bei den Relationen I als auch im Fall der Relationen II, III, IV sowie V und VI, VII, VIII bzw. IX $\geq 1,5A$, besser $\geq 2A$, und noch besser $\geq 2,5A$.

In der Regel ist beim erfindungsgemäßen Verfahren sowohl bei den Relationen I als auch im Fall der Relationen II, III, IV sowie V und VI, VII, VIII bzw. IX jedoch $L \leq 20A$, vielfach $L \leq 15A$, häufig $L \leq 10A$ und oft $L \leq 5A$ gegeben. Diese Längenbeschränkung ist jedoch häufig eher durch Sekundärmerkmale wie z. B. eine ausgezeichnete mechanische Stabilität des Siebes als durch die angestrebte Siebwirkung bedingt.

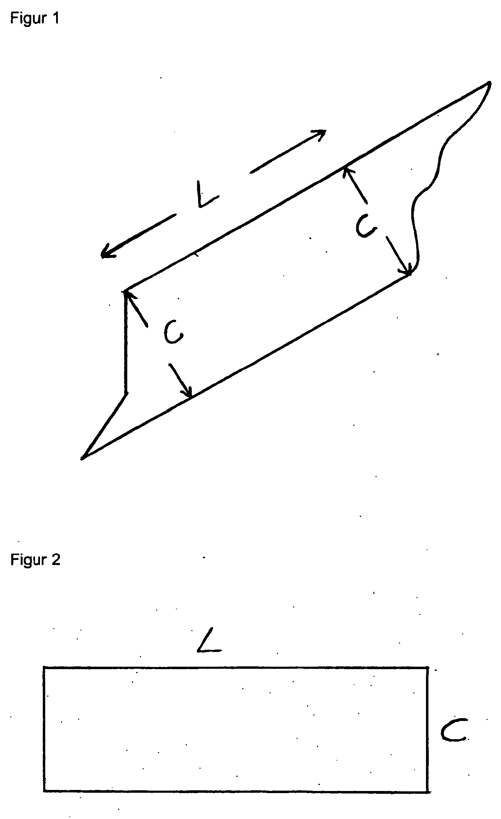

Eine vergleichsweise allgemeine Form einer möglichen erfindungsgemäßen Sieböffnung (bzw. deren Umrisslinie) zeigt beispielhaft die Figur 1.

Im einfachsten Fall kann es sich bei einer erfindungsgemäßen Sieböffnung (bzw. deren Umrisslinie) um ein Rechteck mit den Seitenlängen L und C handeln, wie sie beispielhaft die Figur 2 zeigt.

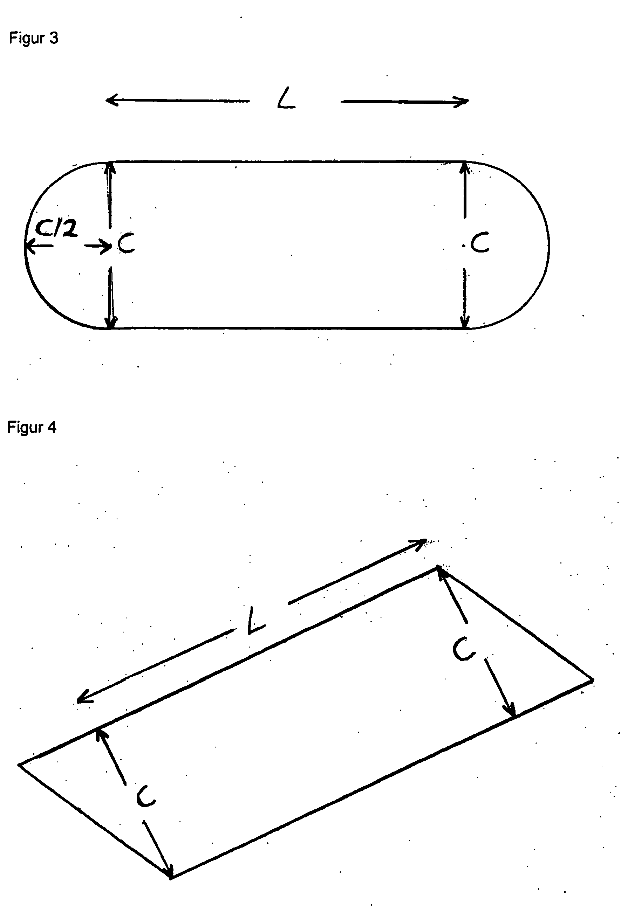

Selbstverständlich kann es sich bei einer erfindungsgemäßen Sieböffnung (bzw. deren Umrisslinie) auch um ein Langloch handeln, wie es beispielhaft die Figur 3 zeigt. Die Geometrie eines Langlochs mit der Kantenlänge L leitet sich von derjenigen eines Rechtecks mit den Seitenlängen L und C dadurch ab, dass die Seiten mit der Länge C jeweils durch einen Halbkreis mit dem Durchmesser C (der Lochweite) ersetzt sind, wobei die Halbkreiswölbung aus der Rechteckfläche herauszeigt. Natürlich ist als erfindungsgemäße Sieböffnung (bzw. deren Umrisslinie (beide Ausdrucksweisen werden in dieser Schrift äquivalent verwendet)) auch ein Parallelogramm möglich, wie es beispielhaft die Figur 4 ausweist. Ferner kommt als Umrisslinie einer erfindungsgemäßen Sieböffnung auch eine solche in Betracht, die sich von einer rechteckigen Umrisslinie dadurch ableitet, dass alle oder wenigstens eine Teilmenge der Ecken des Rechtecks abgerundet worden sind.

Grundsätzlich kann ein erfindungsgemäß zu verwendendes Sieb z. B. mehrere voneinander verschiedene Sorten von erfindungsgemäß möglichen Sieböffnungen aufweisen. Erfindungsgemäß vorteilhaft wird ein bei einem erfindungsgemäßen Verfahren eingesetztes Sieb jedoch nicht mehr als drei, und in der Regel nicht mehr als zwei voneinander verschiedene, das erfindungsgemäße Anforderungsprofil erfüllende, Sorten von Sieböffnungen aufweisen. Ganz besonders vorteilhaft wird ein erfindungsgemäß zu verwendendes Sieb jedoch nur eine Sorte von erfindungsgemäßen Sieböffnungen aufweisen.

Erfindungsgemäß bevorzugt handelt es sich bei den Sieböffnungen (bzw. deren Umrisslinie) eines erfindungsgemäß zu verwendenden Siebes entweder nur um eine erfindungsgemäße Sorte von Rechtecken oder nur um eine erfindungsgemäße Sorte von Langlöchern (die jeweils eine der Relationen I, oder vorzugsweise II, III, IV oder V bzw. VI, VII, VIII oder IX erfüllen).

Der Begriff "Sieb" wird in dieser Schrift synonym mit dem Begriff "Siebboden" verwendet. Im übrigen wird der Begriff "Sieb" oder "Siebboden" in dieser Schrift im Sinne der in der EP-A 1 726 358 in Spalte 5, Zeilen 48 bis 57 gegebenen Begriffsdefinition verwendet.

D.h., der Siebboden kann beispielsweise als Gitter bzw. Rost, als Loch- bzw. Spaltblech (d.h., als Blech mit gestanzten, gelaserten, wassergeschnittenen, oder gefrästen Sieböffnungen) oder als Siebgewebe (es besteht aus miteinander verwobenen Drähten, wobei die Drähte rund oder profiliert sein können) ausgebildet sein. Grundsätzlich kommt für das erfindungsgemäße Verfahren aber auch jede andere in "Aufbereitungs-Technik - Nr. 11/1960, S. 457 bis 473 oder in Chem.-Ing.-Techn. 56 (1984) Nr. 12, Seite 897 bis 907 aufgeführte Siebbodenvariante in Betracht. Selbstverständlich können für das erfindungsgemäße Verfahren aber auch alle in "Sieben und Siebmaschinen, Wiley-VCH GmbH & Co. KGaA, Paul Schmidt et al (2003)" aufgeführten Siebböden für das erfindungsgemäße Verfahren verwendet werden.

Gitter bzw. Roste sowie Siebgewebe (beide gewährleisten besonders hohe spezifische Siebleistungen in $kg/m^3 \cdot h$ bei hohem Wirkungsgrad) eignen sich insbesondere im Fall von nur eine erfindungsgemäße Sorte einer rechteckigen Sieböffnung aufweisenden Siebböden. Eine beispielhafte veranschaulichende Abbildung eines solchen Siebgewebes zeigt die Figur 5 dieser Schrift.

Eine beispielhafte veranschaulichende Abbildung eines solchen Gitters bzw. Rostes zeigt die Figur 6 dieser Schrift.

Beliebige erfindungsgemäße Sieböffnungen (bzw. Umrisslinien von Sieböffnungen) können auf einfache Weise in Loch- bzw. Spaltblechen verwirklicht werden. Erfindungsgemäß vorteilhafte Loch- bzw. Spaltbleche sind jedoch insbesondere solche, die lediglich eine Sorte einer rechteckigen bzw. einer Langlochform aufweisenden Sieböffnung (bzw. deren Umrisslinie) aufweisen.

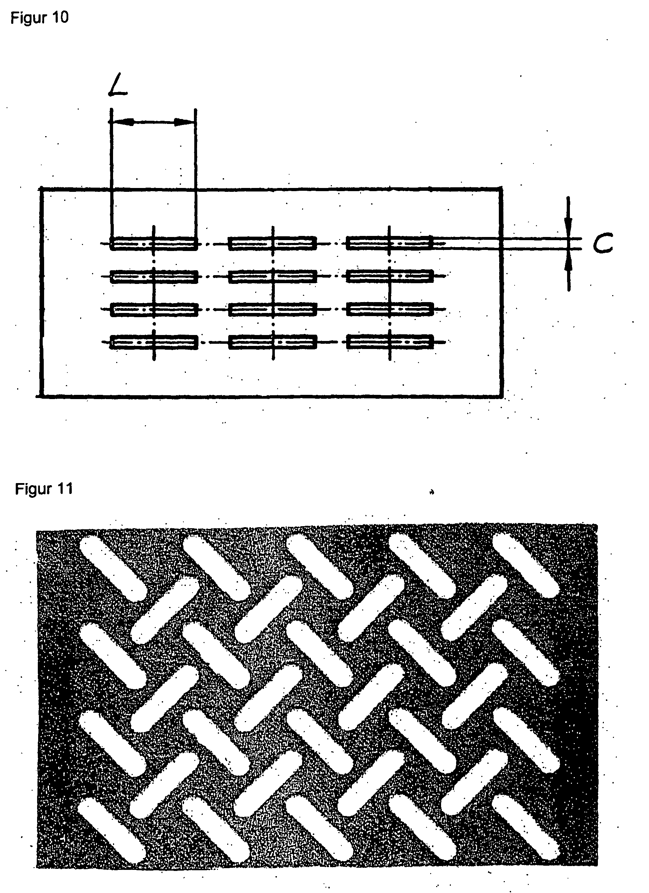

Besonders vorteilhaft an Loch- bzw. Spaltblechen ist, dass die Relativanordnung von erfindungsgemäßen Sieböffnungen in nahezu beliebiger Art und Weise möglich ist. Weist das Spaltblech nur eine Sorte einer rechteckigen bzw. einer Langlochform aufweisenden Sieböffnung auf, kommen als Relativanordnung derselben im Spaltblech für das erfindungsgemäße Verfahren insbesondere die gegeneinander versetzte Sieböffnungsanordnung gemäß Figur 7, die ineinander versetzte Sieböffnungsanordnung gemäß Figur 8 (sie ist (unter anderem aus Stabilitätsgründen) erfindungsgemäß ganz besonders bevorzugt), die Sieböffnungsanordnung in geraden Reihen gemäß der Figuren 9 und 10, oder fischgrätähnliche Sieböffnungsanordnungen gemäß Figur 11 in Betracht. Ein weiterer Vorteil von Spaltblechen liegt darin begründet, dass sie bei Produktumstellungen leichter gereinigt werden können und weniger anfällig für ein Verstopfen der Sieböffnungen durch Steckkorn sind. Auch weisen sie in der Regel eine höhere mechanische Stabilität auf.

Im übrigen können erfindungsgemäß geeignete Lochblechsiebe (bzw. Spaltblechsiebe) wie in der DIN 24041 beschrieben, gestaltet werden.

Typische Blechdicken d von erfindungsgemäß verwendbaren Lochblechsieben (bzw. Spaltblechsieben) betragen 1 bis 5 mm, vorzugsweise 1 bis 3 mm, besonders bevorzugt 1 bis 2 mm.

Die freie Siebfläche F (die Gesamt(querschnitts)fläche aller in einem Spaltblechsiebboden befindlichen Sieböffnungen) von erfindungsgemäß günstigen Spaltblechsiebböden wird, bezogen auf die Gesamtfläche des Spaltblechsiebbodens in typischer Weise 10 bis 60 %, vorzugsweise 20 bis 50 % und besonders bevorzugt 30 bis 50 % betragen.

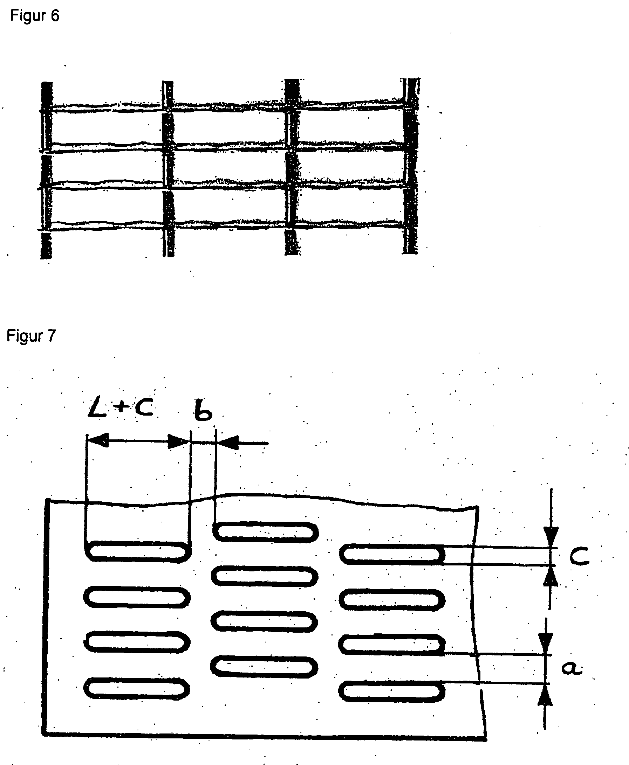

Ein erfindungsgemäß geeignetes Langlochblech (ein erfindungsgemäß geeigneter Langlochsiebboden) mit gegeneinander versetzten Langlöchern gemäß Figur 7 kann z. B. die nachfolgenden Gestaltungsvarianten aufweisen:

| Lochweite C (mm) | Länge L (mm) | Abstand a (mm) | Abstand b (mm) | d (mm) | F (%) |
|---|---|---|---|---|---|
| 1,0 | 19 | 3,0 | 5,0 | 1,5 | 19,8 |
| 1,6 | 18,4 | 2,4 | 5,0 | 1,0 | 31,4 |
| 2,0 | 18 | 10 | 4,5 | 1,25 | 13,3 |
| 2,5 | 17,5 | 3,5 | 5,0 | 1,0 | 32,4 |
| 4,0 | 6,0 | 7,0 | 4,0 | 2,0 | 23,7 |
| 5,0 | 20,0 | 4,0 | 5,0 | 2,0 | 45 |
| 5,0 | 15,0 | 3,0 | 5,0 | 2,0 | 47 |
| 5,0 | 15,0 | 4,0 | 5,0 | 2,0 | 42 |
| 8,0 | 17,0 | 8,0 | 11 | 2,0 | 32 |
| 10,0 | 22,0 | 6,0 | 8,0 | 2,0 | 47 |

Als Werkstoff kommt insbesondere Stahl (z. B. die DIN-Werkstoffe 1.4541 oder 1.4571 sowie Stahl S185 (DIN-Werkstoff 1.0035) gemäß DIN EN 10025 bzw. DIN EN 10088-1) in Betracht.

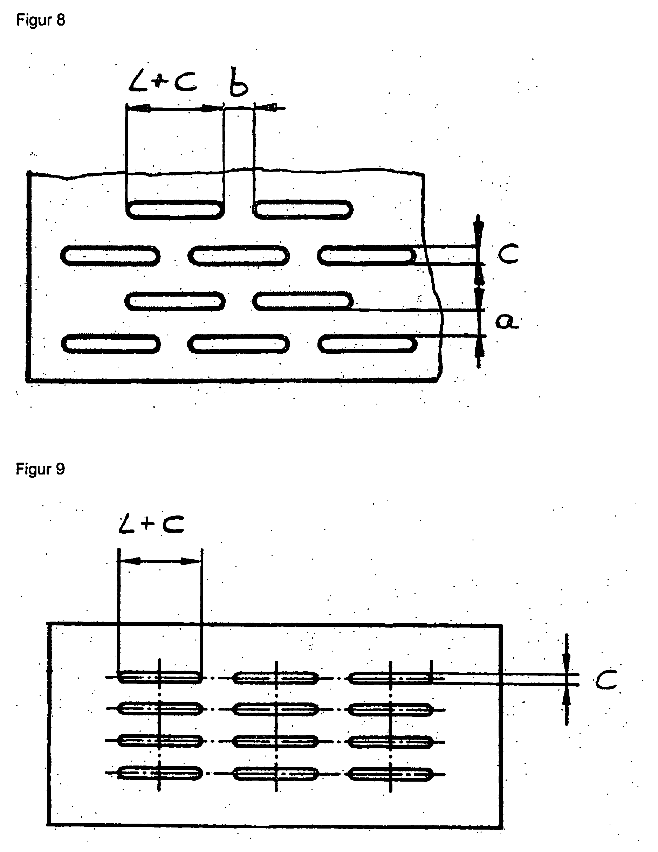

Ein erfindungsgemäß geeignetes Langlochsieb mit ineinander versetzen Langlöchern gemäß Figur 8 kann z. B. die nachfolgenden Gestaltungsvarianten aufweisen:

| Lochweite C (mm) | Länge L (mm) | Abstand a (mm) | Abstand b (mm) | d (mm) | F (%) |
|---|---|---|---|---|---|
| 1,0 | 9 | 2,0 | 4,0 | 1 | 24 |
| 2,0 | 10,5 | 3,0 | 5,5 | 1 | 27 |
| 2,0 | 18,0 | 3,0 | 5,0 | 1 | 31 |
| 4,0 | 18,0 | 3,0 | 5,0 | 1 | 44 |
| 8,0 | 17,0 | 8,0 | 11 | 1 | 32 |

Als Werkstoff kommt insbesondere Stahl (z. B. die DIN-Werkstoffe 1.4541 oder 1.4571) in Betracht.

Im Fall von ringförmigen Katalysatorformkörpern K der Geometrie A x I x B = 5 mm x 2 mm x 3 mm eignen sich für ein erfindungsgemäßes Verfahren z. B. insbesondere Langlochsiebe der vorbeschriebenen Art (insbesondere mit ineinander versetzter Sieböffnungsanordnung) mit C = 1,8 mm und L = 18.2 mm, oder mit C = 2,5 mm und L = 17,5 mm.

Im Fall von ringförmigen Katalysatorformkörpern K der Geometrie A x I x B = 7 mm x 3 mm x 6,9 mm eignen sich für ein erfindungsgemäßes Verfahren z. B. insbesondere Langlochsiebe der vorbeschriebenen Art (insbesondere mit ineinander versetzter Sieböffnungsanordnung) mit C = 6 mm und L = 14 mm oder mit C = 4 mm und L = 16 mm, oder mit C = 6,2 mm und L = 17,8 mm.

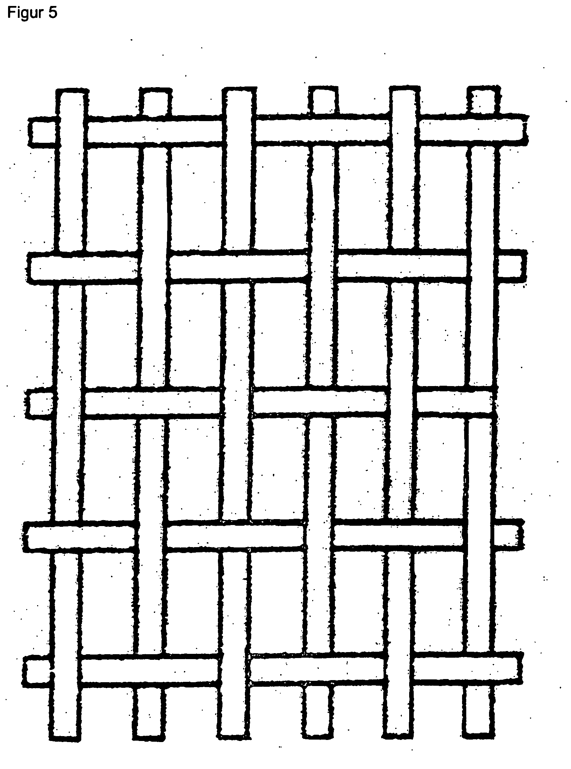

Im Fall von ringförmigen Katalysatorformkörpern der Geometrie A x I x B = 6,6 mm x 3,7 mm x 4,2 mm eignen sich für ein erfindungsgemäßes Verfahren insbesondere Siebgewebe gemäß Figur 5 mit C = 3,5 mm und L = 20 mm. Die zur Fertigung des Siebgewebes verwendete Drahtdicke liegt dabei vorteilhaft bei 1 mm. Als Werkstoff wird mit Vorzug Stahl verwendet. Geeignet sind dabei insbesondere die DIN-Werkstoffe 1.4541 und 1.4571. Selbstverständlich kann in diesem Fall grundsätzlich aber auch eines der vorgenannten Langlochsiebe mit z. B. C = 2,5 mm und L = 17,5 mm verwendet werden.

Bei der Ausführung eines erfindungsgemäßen Verfahrens zum Beschicken eines Reaktors mit einem Katalysatorfestbett erfolgt der Transport des aus Katalysatorformkörpern K und aus (Katalysator)Bruchstücken bestehenden Siebgutes über den erfindungsgemäßen Siebboden erfindungsgemäß vorteilhaft parallel zur Länge L der erfindungsgemäßen Sieböffnungen. In entsprechender Weise erfolgt auch die Aufgabe des Siebgutes auf das Sieb (auf den Siebboden) mit dieser Aufgaberichtung.

Handelt es sich beim erfindungsgemäß verwendeten Siebboden um ein Lochblech mit gestanzten Sieböffnungen, so wird der Stanzgrat in der Regel entfernt und die Umrisslinie der Sieböffnungen anwendungstechnisch zweckmäßig abgerundet. Über die Siebbodendicke ist der Querschnitt einer Sieböffnung normalerweise im wesentlichen konstant (d. h., die Öffnung weist in der Regel einen konstanten Durchgangsquerschnitt auf). Wird der Stanzgrat nicht entfernt, zeigt er normalerweise in Richtung des Siebdurchgangs.

Grundsätzlich kann der Transport des Siebgutes über das Sieb beim erfindungsgemäßen Verfahren durch eine kreis-, ellipsen- und/oder linearförmige Schwingbewegung des Siebbodens erfolgen. Zu diesem Zweck können für ein erfindungsgemäßes Verfahren prinzipiell alle in z. B. Chem.-Ing.-Tech. 56 (1984) Nr. 12, S. 897 bis 907 sowie in Sieben und Siebmaschinen, Grundlagen und Anwendung, Wiley VCH, Paul Schmidt (2003) empfohlenen Siebmaschinen eingesetzt werden.

Die zur Durchführung eines erfindungsgemäßen Verfahrens am besten geeignete Gruppe von Siebmaschinen sind die Plansiebe, bei denen das Siebgut als Siebgutmatte linear oder kreisend auf dem Sieb (dem Siebboden) gleitet. Durch das Eigengewicht und die Reibung gegen das Sieb wird die Siebgutmatte geschert. Von Vorteil ist die sehr geringe, meist negativ wirkende Rückvermischung.

Die Schwingbewegung der Siebfläche erfolgt bei Plansieben in ihrer Siebebene. Die Schwingbewegung kann linear (hin und her) oder kreisförmig verlaufen (im ersten Fall spricht man von einem linearen Planschwingsieb). Im ersteren Fall kann sie in Förderrichtung oder quer dazu erfolgen. Durch asymmetrische Beschleunigung kann bei linearer Schwingbewegung in Förderrichtung auch beim horizontalen Sieb der Längstransport des Siebgutes bewirkt werden.

Die Kreisschwingung bietet den Vorteil, stetig eine optimale Beschleunigung aufrechtzuerhalten. Selbstverständlich ist beim erfindungsgemäßen Verfahren auch eine Kombination aus Linear- und Kreisschwinger anwendbar.

Bei Kreisschwingern wird die horizontale Kreisbewegung häufig durch einen Getriebemotor erzeugt. Bei Linearschwingern wird der ganze Siebrahmen (in welchem sich der Siebboden normalerweise ganz generell eingebracht befindet) durch gegenläufige Unwuchtmassen in eine Linearschwingung versetzt. Linearschwinger können sowohl mit horizontalem, als auch mit geneigtem Siebboden angewendet werden. Beim geneigten Siebboden wird das Siebgut durch entsprechende Neigung der Schwingungsebene gegen den Siebboden, entsprechend einer Wurfparabel, aufwärts und zugleich vorwärts geworfen. Die Neigungswinkel können z. B. von -3° bis 25° betragen. 3° bis 4° sind erfindungsgemäß bevorzugt. Erfindungsgemäß besonders bevorzugt sind zum Beispiel Linearschwingsiebe der Firma RHEWURM GmbH in DE-Remscheid. Rechtecksiebmaschinen sind für einen erfindungsgemäßen Plansiebbetrieb gegenüber Rundsieben bevorzugt. Bei ihnen sind rechteckige Siebböden in einen gleichfalls rechteckigen Siebrahmen eingebracht. Durch die Hintereinanderanordnung von voneinander verschiedenen (verschiedene Sieböffnungen aufweisenden) Siebböden in der Transportrichtung des Siebgutes kann in einer Passage eine Fraktionierung bewirkt werden.

Beispielsweise kann sich an die erfindungsgemäße Siebung, bei der der Siebrückstand (das Überkorn) das erwünschte Siebprodukt ist, in Form eines entsprechenden Rechtecksiebbodens unmittelbar eine weitere Siebung anschließen, bei der im erfindungsgemäß gebildeten Siebrückstand gegebenenfalls enthaltene Formkörper, deren Größe die ringförmigen Katalysatorformkörper überragt, als Siebrückstand vom dann als Siebprodukt erwünschten Siebdurchgang abgetrennt werden können.

Anstelle einer Hintereinanderanordnung der Siebböden, kann auch eine Übereinanderanordnung von Siebböden für das erfindungsgemäße Verfahren angewendet werden. In diesem Fall wird man normalerweise diejenigen Formkörper, deren Größe die ringförmigen Katalysatorformkörper überragt, mit dem obersten Sieb als Siebrückstand abtrennen. Die erfindungsgemäß abzutrennenden Bruchstücke werden hingegen von oben nach unten durchgereicht. D. h., die erfindungsgemäße Siebung erfolgt mit Hilfe der unteren Siebe.

Bei einer Übereinanderordnung von Siebböden werden vorzugsweise Rundsiebe eingesetzt. Die Schwingbewegung wird vorzugsweise so gestaltet, dass der Siebrückstand jeweils zum Umfang des Rundsiebes hingetragen und dort ausgetragen wird.

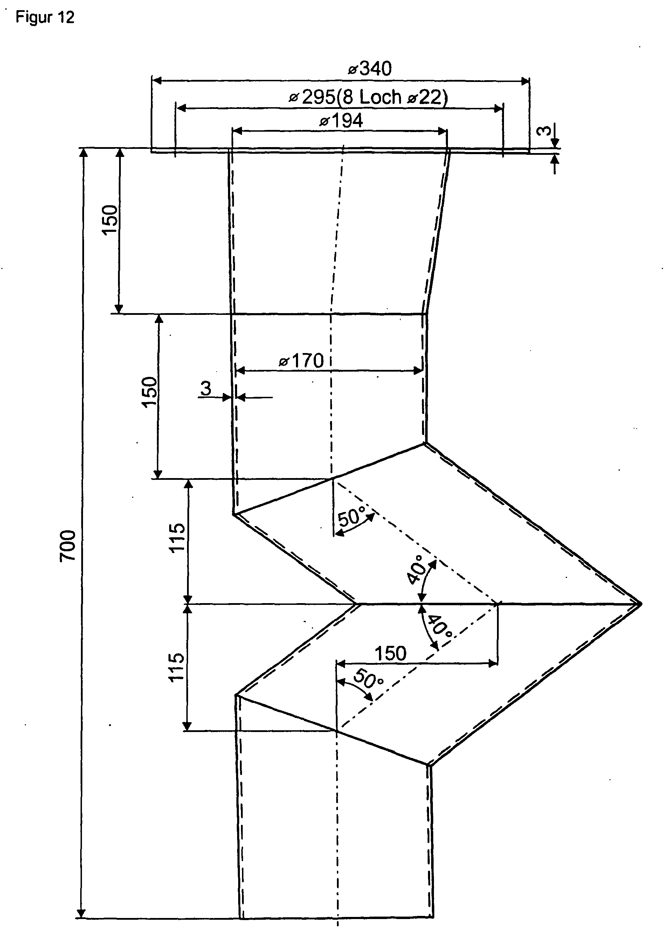

Um die Sieböffnungen im Verlauf einer erfindungsgemäßen Siebung freizuhalten, wird, insbesondere dann, wenn der Siebboden aus Stahl mit vergleichsweise geringem Elastizitätsmodul gefertigt ist, erfindungsgemäß vorteilhaft die Methode der Gummiballklopfung eingesetzt (vgl. Abbildung 12 in Chem.-Ing.-Tech. 56 (1984) Nr. 12, Seite 902). Dabei werden Gummibälle, deren Durchmesser D wenigstens 2 C, bevorzugt wenigstens 3 C, besonders bevorzugt wenigstens 4 C oder 5 C beträgt (im Normalfall wird der Gummiballdurchmesser 15 C, meist sogar 10 C nicht überragen), auf einen Blindboden gegeben, der sich im Abstand Z von üblicherweise etwa 1,2 D bis 1,5 D unter dem Sieb (dem Siebboden) befindet. Die Gummibälle springen auch bei Plansiebmaschinen während des Siebvorgangs (während der Siebung) von unten gegen das Sieb und reinigen das Sieb örtlich. Ihre Elastizität ist so bemessen, dass sie im wesentlichen keinen zusätzlichen Bruch des Siebgutes bedingen. Der Blindboden ist meist ein Lochblech, mit vorzugsweise quadratischen Lochöffnungen, deren Kantenlänge üblicherweise wenigstens A, häufig wenigstens 1,5 A, normalerweise jedoch nicht mehr als 0,8 D, meist nicht mehr als 2/3 D beträgt. In jedem Fall sind die Lochöffnungen des Blindbodens so beschaffen, dass der Siebdurchgang passieren kann. Anwendungstechnisch zweckmäßig werden Siebboden (als "Deckebene") und Blindboden (als "Grundebene") mit identischer Gesamtquerschnittsfläche ausgestaltet sowie durch vier Seitenwände der Höhe Z zu einem quaderförmigen Siebeinleger ergänzt, der in einfacher Weise in den Siebrahmen (die Rahmenhöhe überragt den eingelegten Siebeinleger in der Regel um etwa 10 cm) der Siebmaschine eingelegt werden kann. Beispielsweise kann ein solcher quaderförmiger Siebeinleger in seiner Grundebene in typischer Weise eine Länge von 500 mm (sie verläuft vorzugsweise parallel zur Seitenlänge L der Langlöcher eines Langlochsiebes, z. B. der in dieser Schrift beispielhaft aufgeführten Langlochsiebe) und eine Breite von 250 mm aufweisen. Der Abstand Z von Grundebene und Deckebene kann z. B. 15 bis 30 mm betragen. Beträgt er 25 mm, beträgt der Durchmesser der Gummikugeln vorteilhaft 20 mm. Anwendungstechnisch zweckmäßig enthält ein solcher Einleger in der Regel etwa 20 Gummikugeln. Alternativ zu einer Gummiballklopfung kann eine Siebreinigung während des Siebvorgangs auch durch über und/oder unter dem Siebboden angeordnete Flach- oder Rollenbürsten kontinuierlich bewirkt werden. Die vorstehend beschriebenen siebtechnischen Varianten finden sich auch in Schüttgut Vol. 9 (2003) Nr. 4, S. 272/273 beschrieben. Die in dieser Schrift empfohlenen Freischwingersiebmaschinen sind erfindungsgemäß besonders vorteilhaft. Bei der Wahl der Schwingungsbreite (Hub) und der Drehzahl (Frequenz) hat sich für das erfindungsgemäße Verfahren eine hohe Frequenz und ein kurzer Hub bewährt.

Das erfindungsgemäße Verfahren eignet sich unter anderem im Fall von ringförmigen Katalysatorformkörpern K, deren Aktivmasse wenigstens ein Multielementoxid (häufig ein Multimetalloxid) ist, das

    a) die Elemente Mo, Fe und Bi, oder
    b) die Elemente Mo und V, oder
    c) das Element V sowie zusätzlich P und/oder Ti,

enthält, sowie im Fall von Katalysatorformkörpern K, die als Aktivmasse elementares Silber auf einem oxidischen Trägerkörper enthalten (alle vorgenannten ringförmigen Katalysatorformkörper K sollen in dieser Schrift auch als ringförmige Katalysatorformkörper K* bezeichnet werden).

Vorgenannte Katalysatoren eignen sich insbesondere für heterogen katalysierte partielle Gasphasenoxidationen im Katalysatorfestbett. Vor allem im Fall ihrer Durchführung im Rohrbündelreaktor.

Unter einer vollständigen Oxidation einer organischen Verbindung mit molekularem Sauerstoff wird in dieser Schrift verstanden, dass die organische Verbindung unter reaktiver Einwirkung von molekularem Sauerstoff so umgesetzt wird, dass der in der organischen Verbindung insgesamt enthaltene Kohlenstoff in Oxide des Kohlenstoffs und der in der organischen Verbindung insgesamt enthaltene Wasserstoff in Oxide des Wasserstoffs umgewandelt wird. Alle davon verschiedenen exothermen Umsetzungen einer organischen Verbindung unter reaktiver Einwirkung von molekularem Sauerstoff werden hier als Partialoxidationen einer organischen Verbindung zusammengefasst.

Im besonderen sollen in dieser Schrift unter Partialoxidationen solche exothermen Umsetzungen organischer Verbindungen unter reaktiver Einwirkung von molekularem Sauerstoff verstanden werden, bei denen die partiell zu oxidierende organische Verbindung nach beendeter Umsetzung wenigstens ein Sauerstoffatom mehr chemisch gebunden enthält, als vor Durchführung der Partialoxidation.

Als solche heterogen katalysierte partielle Oxidationen organischer Verbindungen seien beispielhaft genannt die Umsetzung von Methanol zu Formaldehyd (vgl. z. B. CH-A 449600, CH-A 38828), die Umsetzung von Propen zu Acrolein und/oder Acrylsäure (vgl. z. B. die DE-A 23 51 151), die Umsetzung von tert.-Butanol, iso-Buten, iso-Butan, iso-Butyraldehyd oder dem Methylether des tert.-Butanols zu Methacrolein und/oder Methacrylsäure (vgl. z. B. DE-A 25 26 238, EP-A 092 097, EP-A 058 927, DE-A 41 32 263, DE-A 41 32 684 und DE-A 40 22 212), die Umsetzung von Acrolein zu Acrylsäure, die Umsetzung von Methacrolein zu Methacrylsäure (vgl. z. B. DE-A 25 26 238), die Umsetzung von o-Xylol oder Naphthalin zu Phthalsäureanhydrid (vgl. z. B. EP-A 522 871) sowie die Umsetzung von Butadien zu Maleinsäureanhydrid (vgl. z. B. DE-A 21 06 796 und DE-A 16 24 921), die Umsetzung von $C_4$-Kohlenwasserstoffen (insbesondere 1-Buten, 2-Buten, Butadien und/oder n-Butan) zu Maleinsäureanhydrid (vgl. z. B. GB-A 1 464 198 und GB-A 1 291 354), die Umsetzung von Indanen zu Anthrachionen (vgl. z. B. DE-A 20 25 430), die Umsetzung von Ethylen zu Ethylenoxid (vgl. z. B. EP-A 352 849, EP-A 352 850, EP-A 532 325, US-A 5,155,242 und US-A 5,262,551) oder von Propylen zu Propylenoxid (vgl. z. B. DE-AS 12 54 137, DE-A 21 59 346, EP-A 372 972, WO 89/07101, DE-A 43 11 608), die Umsetzung von Propylen und/oder Acrolein zu Acrylnitril (vgl. z. B. DE-A 23 51 151), die Umsetzung von iso-Buten und/oder Methacrolein zu Methacrylnitril (d. h., der Begriff der partiellen Oxidation soll in dieser Schrift auch die partielle Ammoxidation, d. h., eine partielle Oxidation im Beisein von Ammoniak, umfassen), die oxidative Dehydrierung von Kohlenwasserstoffen (vgl. z. B. DE-A 23 51 151), die Umsetzung von Propan zu Acrylnitril oder zu Acrolein und/oder Acrylsäure (vgl. z. B. DE-A 101 31 297, EP-A 1 090 684, EP-A 608 838, DE-A 100 46 672, EP-A 529 853, WO 01/96270 und DE-A 100 28 582) etc..

Im einfachsten Fall kann der ringförmige Katalysatorformkörper K nur aus katalytisch aktiver Masse, die gegebenenfalls mit inertem Material (das z. B. aus Verstärkungsgründen eingearbeitet werden kann) verdünnt sein kann, bestehen (gegebenenfalls ist auch noch Formungshilfsmittel enthalten; z. B. Graphit). Solche ringförmigen geometrischen Katalysatorformkörper werden üblicherweise als ringförmige Vollkatalysatoren bezeichnet. Für derartige ringförmige Katalysatorformkörper K ist das erfindungsgemäße Verfahren von erhöhter Bedeutung.

Die Formgebung kann im Fall von ringförmigen Vollkatalysatoren in Abhängigkeit von der Aktivmasse z. B. dadurch erfolgen, dass man katalytisch aktive Pulvermasse (z. B. eine pulverförmige Multielementoxidaktivmasse) zur ringförmigen Katalysatorgeometrie verdichtet z. B. (in Abhängigkeit von der Aktivmasse) durch Tablettieren, Sintern, Extrudieren oder Strangpressen). Dabei können Formungshilfsmittel zugesetzt werden. Alternativ kann man je nach gewünschter Aktivmasse eine pulverförmige Vorläufermasse zur ringförmigen Katalysatorgeometrie verdichten und den resultierenden ringförmigen Formkörper durch thermisches Behandeln (gegebenenfalls in molekularen Sauerstoff enthaltender Atmosphäre) in den katalytisch aktiven Multielementoxidformkörper überführen (vgl. z. B. US 2005/0263926 und WO 2005/030393 sowie EP-A 1 243331).

Selbstverständlich kann die Formgebung auch so erfolgen, dass man einen ringförmigen geometrischen Formkörper aus katalytisch nicht aktivem Material (aus Inertmaterial) mit Aktivmasse beschichtet (nachstehend auch ringförmiger "Trägerformkörper" oder kurz "Trägerformkörper" genannt). Alternativ kann auch mit Vorläufermasse beschichtet werden und die Überführung in den aktiven ringförmigen Katalysator durch nachträgliche thermische Behandlung erfolgen (gegebenenfalls in molekularen Sauerstoff enthaltender Atmosphäre). Das Beschichten kann in einfachster Weise z. B. dadurch erfolgen, dass man die Oberfläche eines inerten ringförmigen Trägerkörpers mittels eines flüssigen Bindemittels befeuchtet und nachfolgend pulverförmige Aktivmasse oder pulverförmige Vorläufermasse an der befeuchteten Oberfläche anheftet. Die auf diese Weise erhältlichen ringförmigen Katalysatoren werden als ringförmige Schalenkatalysatoren bezeichnet. Geeignete inerte ringförmige Trägerkörper können für viele heterogen katalysierte partielle Gasphasenoxidationen aus porösem oder unporösem Alumiumoxid, Siliciumoxid, Thoriumdioxid, Zirkonoxid, Siliciumcarbid oder Silikaten wie Magnesium- oder Aluminiumsilicat (z. B. Steatit des Typs C 220 der Fa. Ceram Tec), aber auch aus Metallen wie z. B. Edelstahl oder Aluminium bestehen (vgl. z. B. US 2006/0205978).

Anstelle den inerten ringförmigen Trägerkörper mit pulverförmiger Aktivmasse oder mit pulverförmiger Vorläufermasse zu beschichten, kann man den ringförmigen Trägerkörper in vielen Fällen auch mit einer Lösung (einer molekularen und/oder kolloidalen) der katalytisch aktiven Substanz oder mit einer Lösung einer Vorläufersubstanz tränken und nachfolgend das Lösungsmittel verflüchtigen und gegebenenfalls eine chemische Reduktion und/oder thermische Behandlung (gegebenenfalls in molekularen Sauerstoff enthaltender Atmosphäre) anschließen. Die auf diese Weise resultierenden ringförmigen Katalysatorformkörper K werden üblicherweise als Träger- oder Tränkkatalysator bezeichnet.

Unabhängig vom im einzelnen angewandten Herstellungsweg für ringförmige Katalysatorformkörper K, werden die ringförmigen Katalysatorformkörper K in einem gewissen

Umfang immer im Gemisch mit zerbrochenen ringförmigen Katalysatorformkörpern K erhalten, was eine Anwendung des erfindungsgemäßen Verfahrens nahegelegt.

Der Außendurchmesser A von erfindungsgemäß zu verwendenden ringförmigen Katalysatorformkörpern K wird im Regelfall 2 bis 10 mm, häufig 4 bis 8 mm und oft 5 bis 7 mm betragen.

Die Länge (Höhe) B von erfindungsgemäß zu verwendenden ringförmigen Katalysatorformkörpern K kann ebenfalls 2 bis 10 mm, häufig 4 bis 8 mm, oder 5 bis 7 mm betragen.

Erfindungsgemäß muss das Verhältnis B/A in notwendiger Weise ≤ 1 betragen, In sehr vielen Fällen beträgt B/A 0,3 bis 1, meist 0,5 bis 1 und oft 0,6 bis 1.

Die Wandstärke ((A-I)/2) von erfindungsgemäßen Katalysatorformkörpern K beträgt in zweckmäßiger Weise in der Regel 1 bis 3 mm, meist 1 bis 2 mm, oft sogar 1,5 bis 2 mm oder 1 bis 1,5 mm.

Weiterhin ist es für ringförmige Katalysatorformkörper K günstig, wenn das Verhältnis I/A 0,3 bis 0,7, vorzugsweise 0,4 bis 0,6 beträgt.

D. h., das erfindungsgemäße Verfahren ist im besonderen anwendbar bei ringförmigen Katalysatorformkörpern K, mit A = 2 bis 10 mm, B/A = 0,03 bis 1 und I/A = 0,3 bis 0,7.

Alles vorgenannte trifft insbesondere dann zu, wenn es sich bei den ringförmigen Katalysatorformkörpern K um ringförmige Katalysatorformkörper K* handelt.

Ringförmige Katalysatorformkörper K* umfassen unter anderem solche ringförmige Katalysatorformkörper K, deren Aktivmasse ein Multielementoxid der allgemeinen Formel I,

$$Mo_{12}Bi_aFe_bX_c^1X_d^2X_e^3X_f^4O_n \qquad (I),$$

mit

$X^1$ = Nickel und/oder Kobalt,
$X^2$ = Thallium, ein Alkalimetall und/oder ein Erdalkalimetall,
$X^3$ = Zink, Phosphor, Arsen, Bor, Antimon, Zinn, Cer, Blei, Vanadium, Chrom und/oder Wolfram,
$X^4$ = Silizium, Aluminium, Titan und/oder Zirkonium,
$a$ = 0,2 bis 5,
$b$ = 0,01 bis 5,

c =        0 bis 10,

d =        0 bis 2,

e =        0 bis 8,

f =        0 bis 10, und

n =        eine Zahl, die durch die Wertigkeit und Häufigkeit der von Sauerstoff verschie- denen Elemente in I bestimmt wird,

ist.

Die Herstellung entsprechender Vollkatalysatorringe sowie Schalenkatalysatorringe findet sich z. B. beschrieben in der US 2005/0263926, in der WO 02/30569, in der WO 2005/030393, in Research Disclosure RD 2005/497012, in der DE-A 10 2007 005 602 sowie in der DE-A 10 2007 004 961. In den vorgenannten Schriften werden solche ringförmigen Katalysatoren insbesondere für eine heterogen katalysierte Partialoxidation von Propylen zu Acrolein bzw. Acrolein und Acrylsäure sowie von iso-Buten zu Methacrolein empfohlen.

Hinsichtlich der zu verwendenden Ringgeometrie gilt dabei das in dieser Schrift als allgemein gültig bereits gesagte. Eine für das erfindungsgemäße Verfahren besonders relevante Ringgeometrie für Multimetalloxid (I)-Vollkatalysatorformkörper ist z. B. die Geometrie A x l x B = 5 mm x 2 mm x 3 mm. Andere günstige Multimetalloxid(I)-Vollkatalysator-Ringgeometrien A x l x B sind die Geometrien 5 mm x 2 mm x 2 mm, oder 5 mm x 3 mm x 3mm, oder 5,5 mm x 3,5 mm x 3mm, oder 6 mm x 4 mm x 3 mm, oder 6,5 mm x 4,5 mm x 3 mm, oder 7 mm x 5 mm x 3 mm, oder 7 mm x 3 mm x 7 mm, oder 7 mm x 4 mm x 7 mm.

Betreffend die Aktivmassen der Stöchiometrie der allgemeinen Formel I betragen der stöchiometrische Koeffizient b vorzugsweise 2 bis 4, der stöchiometrische Koeffizient c vorzugsweise 3 bis 10, der stöchiometrische Koeffizient d vorzugsweise 0,02 bis 2, der stöchiometrische Koeffizient e vorzugsweise 0 bis 5 und der stöchiometrische Koeffizient f vorteilhaft 0,5 oder 1 bis 10. Besonders bevorzugt liegen die vorgenanten stöchiometrischen Koeffizienten gleichzeitig in den vorgenanten Vorzugsbereichen.

Ferner ist $X^1$ vorzugsweise Kobalt, $X^2$ ist vorzugsweise K, Cs und/oder Sr, besonders bevorzugt K, $X^3$ ist bevorzugt Wolfram, Zink und/oder Phosphor und $X^4$ ist bevorzugt Si. Besonders bevorzugt weisen die Variablen $X^1$ bis $X^4$ gleichzeitig die vorgenannten Bedeutungen auf.

Alles in dieser Schrift gesagte gilt insbesondere bezüglich einer Durchführung der heterogen katalysierten partiellen Gasphasenreaktion in einem Rohrbündelreaktor. Zur Durchführung von heterogen katalysierten partiellen Gasphasenoxidationen in günstiger Weise geeignete Rohrbündelreaktoren sind aus dem Stand der Technik hinreichend bekannt (vgl. z. B. DE-A 44 31 949, EP-A 700 714).

Bei diesen Reaktionen wird, wie bereits erwähnt, das Reaktionsgasgemisch normalerweise durch das in den Kontaktrohren (Reaktionsrohren) des Rohrbündelreaktors befindliche Katalysatorfestbett geführt und während der Verweilzeit der Reaktanden an der Katalysatoroberfläche setzen sich die Reaktanden um.

Die Reaktionstemperatur in den Kontaktrohren wird u. a. dadurch kontrolliert, dass man um die in einem Behälter untergebrachten Kontaktrohre des Rohrbündels einen fluiden Wärmeträger (ein Wärmeaustauschmittel) führt, um aus dem Reaktionssystem Energie abzuführen. Dabei können Wärmeträger und Reaktionsgasgemisch über den Rohrbündelreaktor sowohl im Gleichstrom als auch im Gegenstrom geführt werden.

Neben der Möglichkeit, das Wärmeaustauschmittel dabei in einfacher Weise im wesentlichen unmittelbar längs zu den Kontaktrohren zu führen, kann diese Längsführung auch lediglich über den gesamten Reaktionsbehälter verwirklicht und dieser Längsströmung innerhalb des Reaktionsbehälters durch eine längs der Kontaktrohre aufeinanderfolgende Anordnung von Durchtrittsquerschnitte frei lassenden Umlenkscheiben eine Querströmung so überlagert werden, dass im Längsschnitt durch das Rohrbündel ein mäanderförmiger Strömungsverlauf des Wärmeaustauschmittels resultiert (vgl. z. B. DE-A 44 31 949, EP-A 700 714, DE-PS 28 30 765, DE-A 22 01 528, DE-A 22 31 557 sowie DE-A 23 10 517).

Bei Bedarf können um die Kontaktrohre längs voneinander verschiedener Rohrabschnitte voneinander räumlich im wesentlichen getrennte Wärmeträger geführt werden.

Der Rohrabschnitt, über den sich der jeweilige Wärmeträger erstreckt, repräsentiert dabei üblicherweise eine eigene Reaktionszone. Eine bevorzugt eingesetzte Variante solcher Mehrzonenrohrbündelreaktoren ist der Zweizonenrohrbündelreaktor, wie ihn z. B. die Schriften DE-C 28 30 765, DE-C 25 13 405, US 3,147,084, DE-A 2201 528, EP-A 383224 und DE-A 29 03 582 beschreiben.

Als Wärmeaustauschmittel eignen sich z. B. Schmelzen von Salzen wie Kaliumnitrat, Kaliumnitrit, Natriumnitrit und/oder Natriumnitrat, niedrig schmelzende Metalle wie Natrium, Quecksilber sowie Legierungen verschiedener Metalle, ionische Flüssigkeiten (in denen wenigstens eines der entgegengesetzt geladenen Ionen wenigstens ein Kohlenstoffatom enthält), aber auch konventionelle Flüssigkeiten wie z.B. Wasser oder hochsiedende organische Lösungsmittel (z. B. Mischungen aus Diphyl® und Dimethylphthalat).

Üblicherweise sind die Kontaktrohre aus ferritischem Stahl oder aus Edelstahl gefertigt und weisen häufig eine Wanddicke von einigen mm, z. B. 1 bis 3 mm auf. Ihr Innendurchmesser beträgt meist einige cm, z. B. 10 bis 50 mm, häufig 20 bis 30 mm. Die Rohrlänge erstreckt sich im Normalfall auf wenige Meter (typisch ist eine Kontaktrohrlänge im Bereich von 1 bis 8 m, häufig 2 bis 6 m, vielfach 2 bis 4 m). Anwendungstechnisch zweckmäßig beläuft sich die im Behälter untergebrachte Anzahl an Kontaktrohren (Arbeitsrohren) auf wenigstens 1000, häufig wenigstens 3000 oder 5000 und vielfach auf wenigstens 10000. Häufig beträgt die Anzahl der im Reaktionsbehälter untergebrachten Kontaktrohre 15000 bis 30000 oder 40000 bzw. 50000. Rohrbündelreaktoren mit einer oberhalb von 50000 liegenden Anzahl von Kontaktrohren bilden eher die Ausnahme. Innerhalb des Behälters sind die Kontaktrohre im Normalfall im wesentlichen homogen verteilt angeordnet, wobei die Verteilung zweckmäßig so gewählt wird, dass der Abstand der zentrischen Innenachsen von zueinander nächstliegenden Kontaktrohren (die sogenannte Kontaktrohrteilung) 25 bis 55 mm, häufig 35 bis 45 mm beträgt (vgl. z.B. EP-A 468 290).

Im Normalfall sind jeweils wenigstens Teilmengen der Kontaktrohre (Arbeitsrohre) eines Rohrbündelreaktors, anwendungstechnisch zweckmäßig ihre Gesamtmenge, im Rahmen der Fertigungsmöglichkeiten einheitlich gefertigt. D.h., ihr Innendurchmesser, ihre Wanddicke und ihre Rohrlänge sind innerhalb enger Toleranzen identisch (vgl. WO 03/059857).

Das vorgenannte Anforderungsprofil trifft häufig auch auf die Befüllung solcher einheitlich gefertigten Kontaktrohre mit Katalysatorformkörpern zu (vgl. z. B. WO 03/057653), um einen optimalen und möglichst störungsfreien Betrieb des Rohrbündelreaktors zu gewährleisten. Insbesondere für eine optimale Ausbeute und Selektivität der im Rohrbündelreaktor durchgeführten Reaktionen ist es wesentlich, dass, vorzugsweise alle, Arbeitsrohre des Reaktors möglichst einheitlich mit dem Katalysatorfestbett befüllt, d.h., beschickt sind. Insbesondere auch vor diesem Hintergrund wächst der vorliegenden Erfindung besondere Bedeutung zu.

Arbeitsrohre werden üblicherweise von Thermorohren unterschieden, wie sie z. B. die EP-A 873 783 beschreibt. Während die Arbeitsrohre diejenigen Kontaktrohre sind, in denen die durchzuführende chemische Reaktion im eigentlichen Sinne durchgeführt wird, dienen Thermorohre in erster Linie dem Zweck, die Reaktionstemperatur in den Kontaktrohren zu verfolgen und zu steuern. Zu diesem Zweck enthalten die Thermorohre normalerweise zusätzlich zum Katalysatorfestbett eine lediglich mit einem Temperaturmessfühler beschickte, im Thermorohr längs desselben zentriert geführte Thermohülse. Im Regelfall ist die Anzahl der Thermorohre in einem Rohrbündelreaktor sehr viel kleiner als die Anzahl der Arbeitsrohre. Normalerweise beträgt die Anzahl der Thermorohre $\leq 20$. Da die in Thermorohren enthaltene Thermohülse die Packungsdichte des Katalysatorfestbetts beeinflusst, wird zur Gestaltung des Katalysatorfestbetts im Thermorohr gegebenenfalls zielgerichtet beim erfindungsgemäßen Verfahren anfallender Siebdurchgang mitverwendet (vgl. dazu z. B. EP-A 873 783 und EP-A 1 270 065).

Nicht bei allen heterogen katalysierten partiellen Gasphasenoxidationen am in den Rohren von Rohrbündelreaktoren befindlichen Katalysatorfestbett besteht das Katalysatorfestbett aus einer längs des individuellen Kontaktrohres einheitlichen Schüttung aus einer einzigen Sorte ringförmiger geometrischer Katalysatorformkörper. Vielmehr kann das Katalysatorfestbett über die Gesamtlänge des Kontaktrohres auch aus einem homogenisierten Gemisch mehrerer (d. h., wenigstens zwei) voneinander unterscheidbarer Sorten $S^i$ von geometrischen Katalysatorformkörpern oder von geometrischen Katalysatorformkörpern und geometrischen Inertformkörpern bestehen (d. h., ein solches Gemisch kann aus wenigstens zwei voneinander unterscheidbaren Sorten von geometrischen Katalysatorformkörpern, oder aus einer einzigen Sorte von geometrischen Katalysatorformkörpern und aus einer einzigen Sorte von geometrischen Inertformkörpern, oder aus wenigstens zwei Sorten von voneinander unterscheidbaren geometrischen Katalysatorformkörpern und einer einzigen Sorte von geometrischen Inertformkörpern, oder aus wenigstens zwei Sorten von voneinander unterscheidbaren geometrischen Katalysatorformkörpern und wenigstens zwei Sorten von voneinander unterscheidbaren geometrischen Inertformkörpern bestehen). Unter diesen voneinander verschiedenen Sorten $S^i$ kann sich gegebenenfalls lediglich eine Sorte erfindungsgemäßer ringförmiger Katalysatorformkörper K befinden. Mögliche Unterscheidungsmerkmale der voneinander verschiedenen Sorten $S^i$ sind die Art der Geometrie, die Art der Aktivmasse, die Art des Trägermaterials etc.. Als Materialien für die geometrischen Inertformkörper kommen die gleichen Materialien in Betracht, die bereits für die inerten geometrischen Trägerformkörper bei den Schalenkatalysatoren empfohlen wurden und in den Ablauf der Gasphasenpartialoxidation im wesentlichen nicht eingreifen. Grundsätzlich kommen alle inerten Trägerformkörper auch als geometrische Inertformkörper zur Verdünnung von geometrischen Katalysatorformkörpern in einem Katalysatorfestbett in Betracht. Durch eine solche Verdünnung kann die volumenspezifische Aktivität eines Katalysatorfestbetts auf den Bedarf der jeweiligen heterogen katalysierten partiellen Gasphasenoxidation spezifisch eingestellt werden.

Vorzugsweise weisen geometrische Inertformkörper und geometrische Katalysatorformkörper in einem dem Vorgenannten entsprechenden homogenisierten Gemisch die gleiche oder wenigstens eine einander ähnliche Geometrie auf.

Der Wortlaut "homogenisiertes Gemisch" meint dabei, dass Maßnahmen ergriffen worden sind, um die voneinander verschiedenen Sorten geometrischer Formkörper (bzw. die verschiedenen Längstausdehnungen innerhalb einer Sorte) miteinander homogen zu vermengen. Im Idealfall erreicht die homogene Vermengung entlang des gesamten Längsabschnitts den statistischen Durchschnitt und dies auch bezüglich der jeweiligen individuellen Sorte.

Vielfach besteht eine Kontaktrohrbeschickung (eine Kontaktrohrbefüllung) mit einem Katalysatorfestbett aber auch aus mehreren voneinander unterscheidbar übereinander (hintereinander) angebrachten Längsabschnitten (Katalysatorfestbett(längs)abschnitten, Katalysatorschüttungsabschnitten). Jeder einzelne Längsabschnitt kann dabei über seine Länge einheitlich so gestaltet werden, wie es für ein über seine gesamte Kontaktrohrlänge einheitlich beschicktes Kontaktrohr bereits ausgeführt wurde. Beim Übergang von einem in sich einheitlichen Schüttungsabschnitt zum nächsten in sich einheitlichen Schüttungsabschnitt ändert sich die Zusammenstellung (Zusammensetzung) der Schüttung abrupt. Es entstehen so längs eines individuellen Kontaktrohres Katalysatorfestbettschüttungen, die eine heterogene Struktur aufweisen. Man spricht auch von einer strukturierten Befüllung (bzw. Schüttung) der Kontaktrohre. Am Anfang (in Strömungsrichtung des das Kontaktrohr durchströmenden Reaktionsgases geblickt) und/oder am Ende des Kontaktrohres wird das Katalysatorfestbett häufig durch eine alleinige Schüttung aus geometrischen Inertformkörpern abgeschlossen.

Beispiele für solche strukturierten Befüllungen von Kontaktrohren sind unter anderem in den Schriften US 2006/0161019, EP-A 979 813, EP-A 090 744, EP-A 456 837, EP-A 1 106 598, US 5,198,581 und US 4,203,903 beschrieben.

In der Regel wird die Befüllung eines Kontaktrohres mit einem strukturierten Katalysatorfestbett so gestaltet, dass die volumenspezifische Aktivität des Katalysatorfestbetts in Strömungsrichtung des Katalysatorfestbetts zunimmt. Die volumenspezifische Aktivität eines in sich einheitlichen Längsabschnittes einer Katalysatorfestbettbeschickung eines Kontaktrohres ist dann erhöht, wenn bei durchgehender Beschickung des Kontaktrohres wie im entsprechenden Längsabschnitt des Kontaktrohres unter ansonsten identischen Reaktionsbedingungen (d. h., identische Zusammensetzung des Reaktionsgasgemischs, identische Belastung der Katalysatorfestbettbeschickung mit Reaktionsgasgemisch sowie identische Eintrittstemperatur des Wärmeträgers und identische Strömungsbedingungen des Wärmeträgers) ein erhöhter Eduktumsatz (bezogen auf den einmaligen Durchgang des Reaktionsgasgemischs durch das Kontaktrohr) resultiert.

Unter der Belastung eines einen Reaktionsschritt katalysierenden Katalysatorfestbetts mit Reaktionsgas oder mit einer Reaktionsgaskomponente wird dabei die Menge an Reaktionsgas bzw. an Reaktionsgaskomponente in Normlitern (= Nl; das Volumen in Litern, das die entsprechende Reaktionsgas- bzw. Reaktionsgaskomponentenmenge bei Normalbedingungen, d. h., bei 25 °C und 1 bar, einnehmen würde) verstanden, die pro Stunde durch einen Liter Katalysatorfestbett geführt wird. Reine Inertmaterialschüttungsabschnitte werden dabei nicht miteinbezogen.

Zur Herstellung von Multielementoxidvollkatalysatorformkörpern K wird man, wie bereits gesagt, vorteilhaft ganz generell so vorgehen, dass man ein feinteiliges Gemisch aus Vorläuferverbindungen, das als feinteiliges Formungshilfsmittel in der Regel Graphit zugesetzt enthält, zur gewünschten ringförmigen Geometrie des Katalysatorformkörpers K formt und die dabei resultierenden ringförmigen Katalysatorvorläuferformkörper (sie werden ganz allgemein auch als "ringförmige Grünlinge" bezeichnet) bei erhöhter Temperatur unter Erhalt des erfindungsgemäß zu behandelnden Siebgutes aus ringförmigen Katalysatorformkörpern K und Bruchstücken von Katalysatorformkörpern K (deren Aktivmasse das gewünschte Multielementoxid ist) behandelt.

Im einzelnen kann dabei z. B. wie in den Schriften WO 2005/030393, DE-A 102007005606, DE-A 102007004961, EP-A 467144, EP-A 1060792, DE-A 19855913, WO 01/68245, EP-A 1060792, Research Disclosure RD 2005-497012, WO 03/078310, DE-A 102005035978, DE-A 102005037678, WO 03/78059, WO 03/078310, DE-A 19922113, WO 02/24620, WO 02/062737 und US-A 2005/0131253 beschrieben verfahren werden. Das erfindungsgemäße Verfahren empfiehlt sich nicht zuletzt bei Seitendruckfestigkeiten der ringförmigen Grünlinge von ≤ 20 N.

Mit Vorteil wird man auch bereits die ringförmigen Grünlinge einem erfindungsgemäßen Siebungsverfahren unterwerfen. Selbstverständlich kann man die ringförmigen Grünlinge aber auch einem Siebverfahren gemäß der US-A 7147011 bzw. EP-A 1726358 unterwerfen. Der dabei verbleibende Siebrückstand ist weitgehend frei von Bruchstücken ringförmiger Grünlinge und wird nachfolgend unter Erhalt der ringförmigen Multielementoxidvollkatalysatorformkörper K thermisch behandelt. In ganz besonders vorteilhafter Weise wird eine solche thermische Behandlung auf einem Bandcalcinierer ausgeführt, wie es die WO 02/24620 und die WO 03/078310 beispielhaft beschreiben.

Anwendungstechnisch zweckmäßig befindet sich am Ende des Bandcalcinierers eine Kühlzone, auf der das Calcinationsgut auf eine für die erfindungsgemäße Siebung anwendungstechnisch zweckmäßige Temperatur (z. B. 40 bis 100 °C, meist 60 bis 80 °C) abgekühlt wird. Das Transportband des Bandcalcinierers führt das abgekühlte Calcinationsgut mit Vorteil über einen weichen (thermisch stabilen) Kunststoffschlauch (z. B. aus PVC (Wanddicke: typischerweise 3 mm)) als Bindeglied und der Schwerkraft folgend kontinuierlich der Siebebene der eingesetzten Siebmaschine (vorzugsweise eine Plansiebmaschine bzw. ein Planschwingsiebmaschine) zu. Die Fallhöhe kann dabei z. B. 30 bis 100 cm, häufig 40 bis 70 cm betragen. Um über diese Fallhöhe die Erzeugung von zusätzlichem Bruch der ringförmigen Katalysatorformkörper K zu vermeiden, wird der Verbindungsschlauch mit Vorteil zick-zack-förmig gestaltet, wie es Figur 12 zeigt. In typischer Weise beträgt der Innendurchmesser eines solchen Verbindungsschlauches bezogen auf einen Produktionsstrom von 30 kg/h bis 70 kg/h ringförmiger Katalysatorformkörper K pro Stunde etwa 20 cm. Die erfindungsgemäße Siebung kann so mit der thermischen Behandlung nahtlos verknüpft ebenso wie letztere kontinuierlich durchgeführt werden. Die Siebung selbst wird mit Vorteil an Luft durchgeführt (insbesondere im Fall aller in dieser Schrift beispielhaft aufgeführten Multielementoxidkatalysatoren). Die Verweilzeit des Siebgutes in der Siebmaschine liegt dabei typisch bei 0,05 bis 0,6 h, häufig bei 0,1 bis 0,3 h. Bei stark hygroskopischen oder sauerstoffempfindlichen Katalysatoren bzw. Aktivmassen kann die Siebung auch unter Ausschluß von Feuchtigkeit und/oder Sauerstoff (z. B. unter $N_2$) erfolgen. Von der Siebmaschine werden die ringförmigen Katalysatorformkörper K in der Regel unmittelbar einem luftdicht verschließbaren Behältnis zugeführt, in welchem sie gelagert werden. Aus diesem Behältnis (z. B. ein mit einer Polypropyleneinhüllenden ausgeschlagenes Fass) können sie dann z. B. zum Zweck einer strukturierten Befüllung von Reaktionsrohren (Kontaktrohren) der Lehre der DE-A 102004023249 folgend entnommen werden. Auf dem Weg vom Lagerfass in die in der DE-A 102004023249 empfohlene Verpackung kann in vorteilhafter Weise nochmals eine erfindungsgemäße Siebung vorgenommen werden. Wird die thermische Behandlung der ringförmigen Grünlinge im Bandcalcinierer nicht unter Luft durchgeführt, sondern z. B. unter $N_2$ und/oder $H_2O$, so sind Bandcalcinierer und Siebmaschine anwendungstechnisch zweckmäßig durch ein Zellenrad getrennt, das verhindert, dass zu große $N_2$- und/oder $H_2O$-Mengen vom Bandcalcinierer auf dem Weg des Calcinationsgutes (Siebgutes) zur erfindungsgemäßen Siebung ausgelassen werden.

Als Siebmaschine eignet sich dabei für die erfindungsgemäße Siebung mit besonderem Vorteil ein Freischwinger vom Typ E. A. 36-3 der Fa. Engelsmann AG, DE-67059 Ludwigshafen (Siebfläche: ca. 0,375 $m^2$, Siebneigung: 3-4°, DIN-Werkstoff 1.4541, drei in Förderrichtung aneinandergereihte Siebeinleger (die ersten beiden sind identische Unterkornsiebeinleger, der dritte Siebeinleger ist zur Abtrennung von Überkorn gedacht) von jeweils 500 mm x 250 mm x 25 mm mit je 20 Gummikugeln (Durchmesser: 20 mm, Typ: 2610-2-60 als Siebhilfen)).

Die verwendeten Siebböden richten sich den Empfehlungen dieser Anmeldung folgend nach der Geometrie des Siebgutes (der ringförmigen Katalysatorformkörper K).

Die beschriebenen erfindungsgemäßen Verfahrensweisen eignen sich selbstredend auch dann, wenn die Aktivmasse der ringförmigen Katalysatorformkörper ein Multielementoxid der allgemeinen Formel II,

$$Mo_{12}P_aV_bX_c^1X_d^1X_e^3Sb_fRe_gS_hO_n \qquad (II),$$

mit

$X^1 =$ Kalium, Rubidium und/oder Cäsium,
$X^2 =$ Kupfer und/oder Silber,
$X^3 =$ Cer, Bor, Zirkonium, Mangan und/oder Wismut,
$a =$ 0,5 bis 3,
$b =$ 0,01 bis 3,
$c =$ 0,2 bis 3,
$d =$ 0 bis oder 0,01 bis 2,
$e =$ 0 bis 2,
$f =$ 0 bis oder 0,01 bis 2,
$g =$ 0 bis 1,
$h =$ 0 bis oder 0,001 bis 0,5, und
$n =$ eine Zahl, die durch die Wertigkeit und Häufigkeit der von Sauerstoff verschiede- nen Elemente in II bestimmt wird,

ist.

Solche ringförmigen Katalysatorformkörper eignen sich mit Vorteil insbesondere für eine heterogen katalysierte partielle Gasphasenoxidation von Methacrolein zu Methacrylsäure. Als mögliche Ringgeometrien kommen dabei alle in dieser Schrift allgemein genannten in Betracht.

Bevorzugt sind ringförmige Vollkatalysatorformkörper K aus Multielementoxiden II z. B. nach der in der EP-A 467 144 beschriebenen Verfahrensweise erhältlich.

Eine bevorzugte Ringgeometrie ist dabei diejenige mit A x I x B = 7 mm x 3 mm x 6,9 mm (vgl. auch DE-A 102007005602). Im übrigen können die in der EP-A 467 144 sowie der DE-A 102007005602 beschriebenen Partialoxidationsverfahrensbedingungen angewendet werden.

Das erfindungsgemäße Verfahren eignet sich weiterhin für ringförmige Katalysatorformkörper K, deren Aktivmasse eine Multielementoxidaktivmasse der allgemeinen Formel III,

$$V_1P_bFe_cX_d^1X_e^2O_n \qquad (III),$$

in der die Variablen folgende Bedeutung aufweisen:

$X^1 =$ Mo, Bi, Co, Ni, Si, Zn, Hf, Zr, Ti, Cr, Mn, Cu, B, Sn und/oder Nb,
$X^2 =$ K, Na, Rb, Cs und/oder Tl,
$b =$ 0,9 bis 1,5,
$c =$ 0 bis 0,1,
$d =$ 0 bis 0,1,
$e =$ 0 bis 0,1 und

n = eine Zahl, die durch die Wertigkeit und Häufigkeit der von Sauerstoff verschiede- nen Elemente in III bestimmt wird,

ist.

Derartige Katalysatoren eignen sich insbesondere für die heterogen katalysierte partielle Gasphasenoxidation von Kohlenwasserstoffen mit mindestens vier Kohlenstoffatomen (insbesondere n-Butan, n-Butene und/oder Benzol) zu Maleinsäureanhydrid. Als möglich Ringgeometrien kommen dabei alle in dieser Schrift allgemein genannten in Betracht.

Mit Vorteil sind diese ringförmigen Katalysatorformkörper ebenfalls ringförmige Vollkatalysatoren, wie sie z. B. gemäß der WO 03/078310, der WO 01/68245, der DE-A 102005035978 sowie der DE-A 102007005602 erhältlich sind. Günstige Ringgeometrien sind dabei z. B. A x I x B = 6,6 mm x 3,7 mm x 4,2 mm oder 5 mm x 2,5 mm x 3,2 mm.

Im übrigen sind die in der WO 03/078310, der WO 01/68245, der DE-A 102005035978 sowie der DE-A 102007005602 empfohlenen Partialoxidationsverfahrensbedingungen anwendbar.

Ferner eignet sich die erfindungsgemäße Verfahrensweise mit Vorteil für ringförmige Katalysatorformkörper K, deren Aktivmasse eine Multielementoxidaktivmasse der allgemeinen Formel IV,

$$\mathrm{Mo}_{12}\mathrm{V}_a\mathrm{X}_b^1\mathrm{X}_c^2\mathrm{X}_d^3\mathrm{X}_e^4\mathrm{X}_f^5\mathrm{X}_g^6\mathrm{O}_n \qquad\qquad \text{(IV),}$$

mit

$X^1 =$ W, Nb, Ta, Cr und/oder Ce,
$X^2 =$ Cu, Ni, Co, Fe, Mn und/oder Zn,
$X^3 =$ Sb und/oder Bi,
$X^4 =$ eines oder mehrere Alkalimetalle (Li, Na, K, Rb Cs) und/oder H,
$X^5 =$ eines oder mehrere Erdalkalimetalle (Mg, Ca, Sr, Ba),
$X^6 =$ Si, Al, Ti und/oder Zr,
$a =$ 1 bis 6,
$b =$ 0,2 bis 4,
$c =$ 0 bis 18, vorzugsweise 0,5 bis 18,
$d =$ 0 bis 40,
$e =$ 0 bis 2,
$f =$ 0 bis 4,
$g =$ 0 bis 40, und
$n =$ eine Zahl, die durch die Wertigkeit und Häufigkeit der von Sauerstoff verschiede- ne Element in IV bestimmt wird,

ist. Sie eignen sich vor allem für eine heterogen katalysierte partielle Gasphasenoxidation von Acrolein zu Acrylsäure. Als mögliche Ringgeometrien kommen dabei alle in dieser Schrift allgemein genannten in Betracht. Mit Vorteil sind hier die ringförmigen Katalysatorformkörper K Schalenkatalysatoren, wie sie z. B. gemäß der DE-A 102004025445, der DE-A 10350822, der DE-A 102007010422, der US 2006/0205978 sowie der EP-A 714700 und dem in diesen Schriften zitierten Stand der Technik erhältlich sind. Die Aktivmassenschalendicke kann 10 bis 1000 $\mu$m, bevorzugt 50 bis 500 $\mu$m und besonders bevorzugt 150 bis 250 $\mu$m betragen. Günstig sind die Schalendicken der beispielhaften Ausführungsformen der EP-A 714700. Die vorgenannte Schrift beschreibt auch die Partialoxidationsbedingungen beispielhaft. Bevorzugte Ringgeometrie ist diejenige mit A x I x B = 7 mm x 4 mm x 3 mm.

Ein V und Ti enthaltendes Multielementoxid (insbesondere ein solches gemäß den Schriften US-A 6,528,683 oder US-A 6,586,361 oder US-A 6,362,345) eignet sich insbesondere für eine heterogen katalysierte partielle Oxidation von o-Xylol und/oder Naphthalin zu Phthalsäureanhydrid.

Vorzugsweise werden die vorgenannten Multielementoxide dabei als ringförmige Schalenkatalysatoren eingesetzt. Als beispielhafte Ringgeometrien seien genannt die Ringgeometrien A x I x B = 8 mm x 5 mm x 6 mm, oder 8 mm x 4 mm x 6 mm, oder 8 mm x 3 mm x 6 mm und 7 mm x 4 mm x 7 mm.

Ringförmige Katalysatorformkörper, deren Aktivmasse elementares Silber auf einem oxidischen Trägerkörper aufweist, eignen sich (vor allem als Trägerkatalysatoren) insbesondere für eine heterogen katalysierte partielle Gasphasenoxidation von Ethylen zu Ethylenoxid (vgl. EP-A 496470). Als Trägerformkörper kommen vor allem solche in Betracht, die zu wenigstens 80 Gew.-% aus Aluminiumoxid (z. B. $\mathrm{Al}_2\mathrm{O}_3$) bestehen.

Als elementares Silber in ihrer auf einem oxidischen Trägerkörper aufgebrachten Aktivmasse enthaltende Trägerkatalysatoren für eine heterogen katalysierte partielle Gasphasenoxidation von Ethylen zu Ethylenoxid eignen sich aber auch die ringförmigen Trägerkatalysatoren der EP-A 619 142, EP-A 624 398, EP-A 804 289 und EP-A 937 498. Für alle vorgenannten Trägerkatalysatoren kommt das erfindungsgemäße Verfahren als geeignet in Betracht.

Günstige Ringgeometrien A x I x B sind dabei unter anderem die Ringgeometrien 8,5 mm x 3,2 mm x 8,5 mm, sowie 8,5 mm x 3,4 mm x 8,5 mm und 8 mm x 3 mm x 8 mm bzw. 7,7 mm x 3 mm x 5 mm.

Generell ist das erfindungsgemäße Verfahren nicht zuletzt bei ringförmigen Katalysatorformkörper K (insbesondere im Fall von Multielementoxidvollkatalysatoren) günstig, deren Seitendruckfestigkeit ≤ 20 N (in der Regel ≥ 1 N) beträgt. Häufig beträgt vorgenannte Seitendruckfestigkeit ≥ 5 N und ≤ 15 N.

Als Seitendruckfestigkeit wird dabei in dieser Schrift die Druckfestigkeit bei Stauchung des ringförmigen Katalysatorformkörpers K (bzw. des ringförmigen Grünlings oder ringförmigen Katalysatorvorläuferformkörpers) senkrecht zur zylindrischen Einhüllenden (d. h., parallel zur Fläche der Ringöffnung) verstanden.

Dabei beziehen sich alle Seitendruckfestigkeiten dieser Schrift auf eine Bestimmung mittels einer Materialprüfmaschine der Fa. Zwick GmbH & Co (D-89079 Ulm) des Typs Z 2.5/TS 15. Diese Material-Prüfmaschine ist für quasistatische Beanspruchung mit zügigem, ruhendem, schwellendem oder wechselndem Verlauf konzipiert. Sie ist für Zug-, Druck- und Biegeversuche geeignet.

Der installierte Kraftaufnehmer des Typs KAF-TC der Fa. A.S.T. (D-01307 Dresden) mit der Herstellnummer 03-2038 wird dabei entsprechend der DIN EN ISO 7500-1 kalibriert und war für den Messbereich 1-500 N einsetzbar (relative Maßunsicherheit: ± 0,2 %).

Vorzugsweise werden Messungen von Seitendruckfestigkeiten mit folgenden Parametern durchführt:

Vorkraft = 0,5 N.
Vorkraft-Geschwindigkeit = 10 mm/min.
Prüfgeschwindigkeit = 1,6 mm/min.

Dabei wird der obige Stempel zunächst langsam bis kurz vor die Fläche der zylindrischen Einhüllenden des ringförmigen Formkörpers abgesenkt. Dann wird der obere Stempel abgestoppt, um anschließend mit der deutlich langsameren Prüfgeschwindigkeit mit minimaler, zu weiterer Absenkung erforderlicher, Vorkraft abgesenkt zu werden. Die Vorkraft, bei der der ringförmige Formkörper Rissbildung zeigt, ist die Seitendruckfestigkeit (SDF).

Beispiele und Vergleichsbeispiele

I. Wie in Research Disclosure RD 2005-497012 im Beispiel I., B), VVK3, beschrieben, wurden ringförmige Multielementoxidvollkatalysatorformkörper der Geometrie A x I x B = 5 mm x 2 mm x 3 mm mit der Elementstöchiometrie $Mo_{12}Bi_1W_2Co_{5,5}Fe_{2,94}Si_{1,59}K_{0,08}O_x$ hergestellt. Die thermische Behandlung der Grünlinge erfolgte dabei wie in RD 2005-497012 angegeben in einem Bandcalcinierer gemäß DE-A 10048957. Nach Abkühlung des calcinierten Calcinationsgutes in einer in den Bandcalcinierer integrierten Kühlzone auf eine Temperatur von 60 °C wurde selbiges kontinuierlich durch einen gemäß Figur 12 zick-zack-förmig gestalteten PVC-Schlauch hindurch (die numerischen Zahlenangaben in Figur 12 sind Winkelgrade oder mm) einer Planschwingsiebmaschine "Freischwinger vom Typ E.A. 36-3 der Fa. Engelsmann AG, DE-67059 Ludwigshafen (Siebfläche: ca. 0,375 m$^2$; Siebneigung: 3-4°, DIN-Werkstoff 1.4541, drei in Förderrichtung aneinandergereihte Siebeinleger (die ersten beiden waren identische Unterkornsiebeinleger, der dritte Siebeinleger bewerkstelligte eine Überkornabtrennung) von jeweils 500 mm x 250 mm x 25 mm mit jeweils 20 Gummikugeln (Durchmesser: 20 mm, Typ: 2610-2-60 als Siebhilfen))" zugeführt und einer kontinuierlichen hochfrequenten (ca. 15 Hz) Siebung mit kurzem Hub (ca. 15 mm) unterworfen.

Als Siebböden wurden Spaltblechsiebe mit rechteckigen Sieböffnungen (bzw. Umrisslinien derselben) in versetzten Reihen analog Figur 8 verwendet. Mit dem von Überkorn befreiten Siebrückstand der in Förderrichtung ersten beiden Siebeinleger wurde anschließend jeweils ein Reaktionsrohr (25 mm Innendurchmesser, 2,7 m Länge) befüllt. Mittels 2511 Nl/h $N_2$ wurde das beschickte Reaktionsrohr durchströmt (das Reaktionsrohr war in Strömungsrichtung offen gegen 1,017 bar bei 20,5 °C) und der dabei jeweils resultierende Druckverlust Δp (mbar) ermittelt. Die Reaktionsrohrbeschickung bestand in Strömungsrichtung jeweils zunächst auf einer Länge von 1,0 m aus einem homogenisierten Gemisch aus 30 Gew.-% unbeschädigten Steatitringen derselben Geometrie und 70 Gew.-% bei der Überkornabtrennung anfallendem Siebdurchgang und daran anschließend auf einer Länge von 1,7 m nur aus dem vorgenannten Siebdurchgang. Die Siebbodendicke war 1 mm.

Die Verweilzeit des Siebgutes auf einem der Siebeinleger betrug im Mittel etwa 10 Minuten.

Die nachfolgende Tabelle 1 weist die in Abhängigkeit von den Sieböffnungsparametern C und L der beiden Unterkornsiebeinleger gemäß Figur 2 erhaltenen Ergebnisse aus.

Der Quotient $m_U/m_{Ges}$ gibt dabei den Gewichtsanteil des bei der Siebung abgetrennten Unterkornanteils in Gew.-% und bezogen auf das insgesamt aufgegebene Gesamtsiebgut an. B steht für erfindungsgemäßes Beispiel, V steht für Vergleichsbeispiel. Zusätzlich enthält Tabelle 1 das Ergebnis bei Verwendung von ungesiebtem Calcinationsprodukt zur Reaktionsrohrbeschickung.

Tabelle 1

| | C (mm) | L (mm) | $m_U/m_{Ges}$ (Gew.-%) | $\Delta p$ (mbar) |
|---|---|---|---|---|
| B1 | 1,8 | 20 | 0,53 | 258 |
| V1 (A > C > B und L = C) | 4,5 | 4,5 | 1,05 | 267 |
| V2 (A > C > B und L > C) | 4,5 | 6,0 | 25,9 | 245 |
| V3 (C < (A-I/2) | 1,0 | 20 | 0,28 | 289 |
| V4 (ungesiebt) | - | - | 0 | 301 |
| B1 erzielte das zweitbest Ergebnis für $\Delta p$ bei vergleichsweise geringem $m_U/m_{Ges}$. | | | | |

Beim verwendeten Überkornsiebeinleger war C = 6 mm und L = 14 mm.

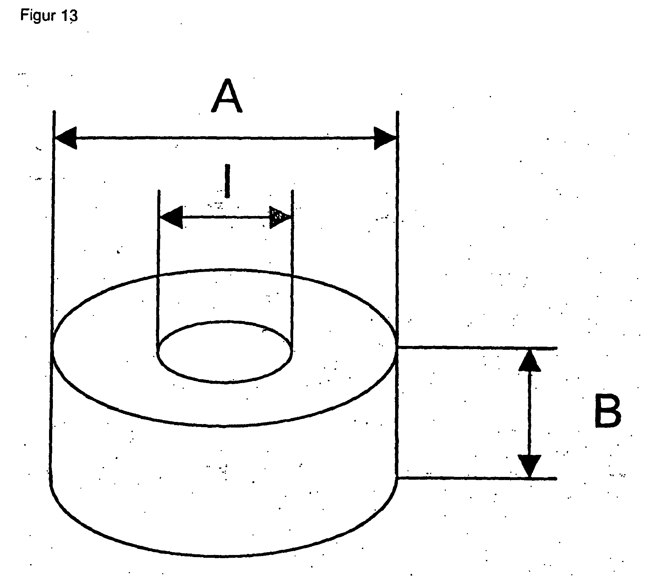

Eine detaillierte Analyse der gefundenen Ergebnisse ergab mit Bezug auf die Figuren 13 bis 16 folgenden Hintergrund. Figur 13 zeigt schematisch einen unbeschädigten ringförmigen Katalysatorformkörper.

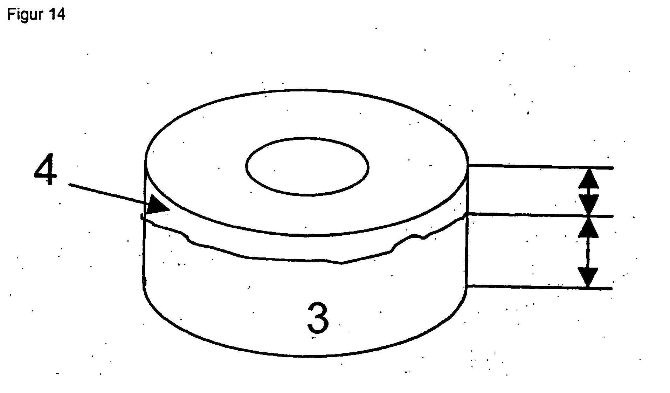

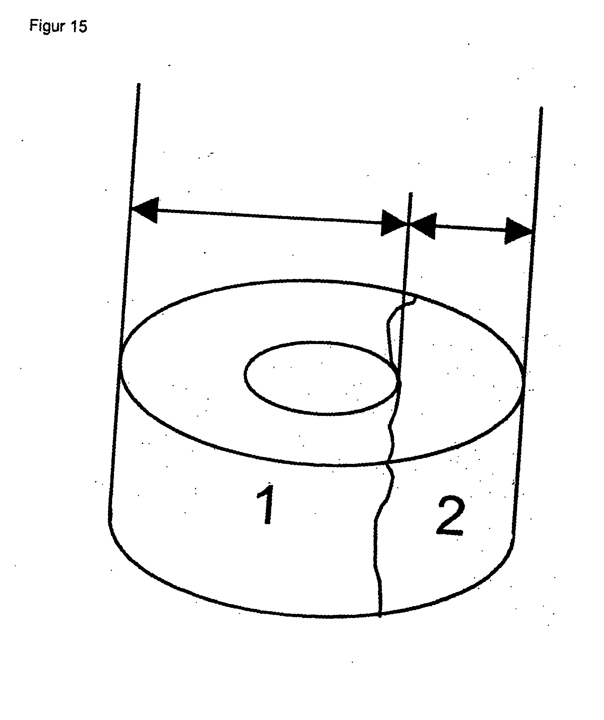

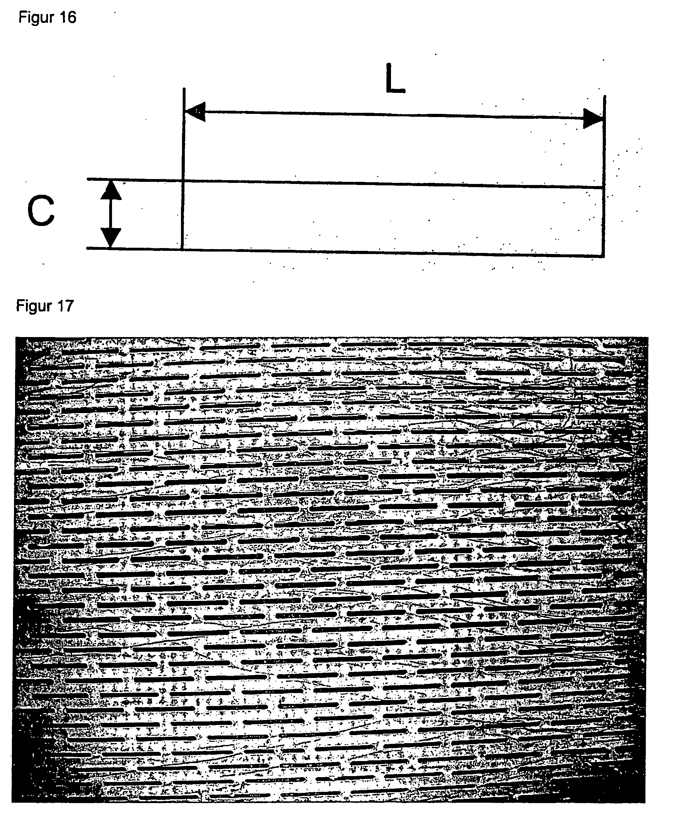

Die Figuren 14 und 15 zeigen schematisch bei der Herstellung der ringförmigen Katalysatorformkörper mit erhöhter Häufigkeit in denselben auftretende Bruchlinien, sowie beim Bruch resultierende Bruchstücke 1 und 2, beziehungsweise 3 und 4. Figur 16 zeigt schematisch eine Sieböffnung (bzw. deren Umrisslinie) von oben.

Bei B1 waren bei der Feinkornsiebung die feinteiligen Bruchstücke 2 und 4 Bestandteil des Siebdurchgangs und die grobteiligen Bruchstücke 1 und 3 im Siebrückstand.

Bei V1 waren bei der Feinkornsiebung Bruchstücke 1 und 2 Bestandteil des Siebdurchgangs und Bruchstücke 3 und 4 im Siebrückstand.

Bei V2 waren bei der Feinkornsiebung Bruchstücke 2 und 4 sowie 1 und 3 und auch ganze Ringe Bestandteil des Siebdurchgangs.

Bei einer Erhöhung der Verweilzeit des Siebgutes auf den Feinkornsiebeinlegern nahm der Anteil ganzer Ringe im Siebdurchgang signifikant zu.

Bei V3 waren bei der Feinkornsiebung neben Staub im wesentlichen nur Bruchstücke 4 im Siebdurchgang, Bruchstücke 1, 2 und 3 dagegen im Siebrückstand.

Das Ausführungsbeispiel B1 kann in völlig entsprechender Weise durchgeführt werden, wenn man in den Siebeinlegern die Spaltblechsiebe mit rechteckigen Sieböffnungen durch solche mit Langlochöffnungen gemäß Figur 8 ersetzt. Dabei können die beiden Unterkornsiebeinleger folgende Ausgestaltung des Spaltblechsiebs aufweisen:

C = 1,8 mm; L = 18,8 mm; a = 3,4 mm; b = 3 mm; d = 1 mm; F = 23,4 %.

Der Überkornsiebeinleger kann dabei folgende Ausgestaltung des Spaltblechsiebs aufweisen:

C = 5,7 mm; L = 14 mm; a = 5,9 mm; b = 5,4 mm; d = 1 mm; F = 38,7 %.

Sowohl im Fall der Unterkornsiebeinleger als auch im Fall des Überkornsiebeinlegers ist der DIN-Werkstoff (Stahl) 1.4541 der bevorzugte. Als Alternative eignet sich auch der DIN-Werkstoff 1.4571.

Der Blindboden ist aus dem selben Material gefertigt und weist quadratische Sieböffnungen 10 mm x 10 mm in einer Spaltblechsiebausgestaltung (d = 1 mm) mit Stegbreiten von 2,9 mm auf allen Seiten einer Sieböffnung auf.

Figur 17 zeigt einen Ausschnitt eines solchen Unterkornsiebeinlegers von oben.

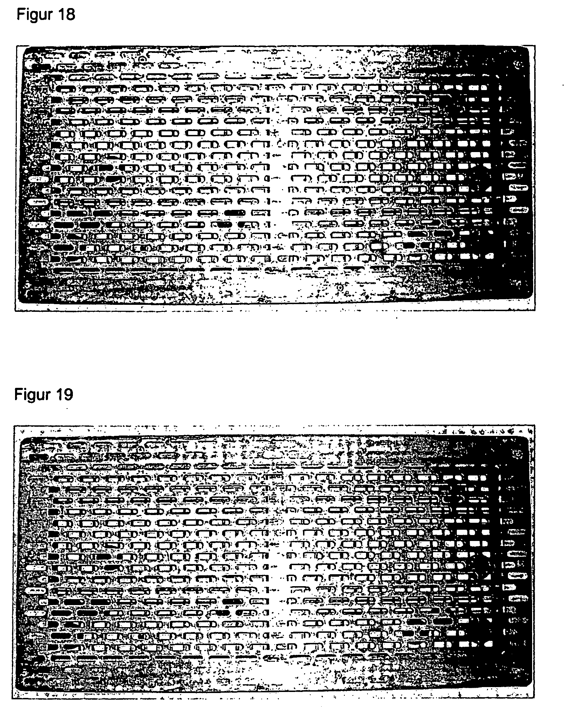

Figur 18 zeigt einen Ausschnitt eines solchen Überkornsiebeinlegers von oben.

II. Wie in Research Disclosure RD 2005-497012 in Beispiel III., A beschrieben, wurden ringförmige Multielementoxidvollkatalysatorformkörper jedoch mit der Geometrie A x I x B = 7 mm x 3 mm x 6,9 mm hergestellt. Die Elementstöchiometrie war $Mo_{12}P_{1,5}V_{0,6}Cs_{1,0}Cu_{0,5}Sb_1S_{0,04}O$. Die thermische Behandlung der Grünlinge erfolgte dabei wie in RD 2005-497012 angegeben in einem Bandcalcinierer gemäß DE-A 10048957.

Nach Abkühlung des calcinierten Calcinationsgutes in einer in den Bandcalcinierer integrierten Kühlzone auf eine Temperatur von 60 °C wurde selbiges wie in I. der in I. beschriebenen Siebung zugeführt. Die nachfolgende Tabelle 2 weist die in Abhängigkeit von den Sieböffnungsparametern C und L der beiden Unterkorneinleger gemäß Figur 2 erzielten Ergebnisse aus. Das einen Innendurchmesser von 25 mm und eine Länge von 3,99 m aufweisende Reaktionsrohr wurde stets nur mit dem bei der Überkornabtrennung anfallenden Siebdurchgang beschickt. Die Druckverlustbestimmung erfolgte wie in I., jedoch mittels eine Stickstoffstromes von nur 1996 Nl/h.

Tabelle 2

|  | C (mm) | L (mm) | $m_U/m_{Ges}$ (Gew.-%) | $\Delta p$ (mbar) |
|---|---|---|---|---|
| B2 | 6,0 | 20 | 17,6 | 95 |
| B3 | 4,0 | 20 | 12,3 | 99 |
| V5 (A > C > B und L = C) | 6,95 | 6,95 | 19,8 | 102 |
| V6 (A > C > B und L > C) | 6,95 | 13 | 38,7 | 92 |
| V7 (C < (A-I/2) | 1,5 | 20 | 10,3 | 113 |
| V8 (ungesiebt) | - | - | 0 | 119 |
| B2 und B3 erzielten das zweit- bzw. drittbeste Ergebnis für $\Delta p$ bei vergleichsweise geringem $m_U/m_{Ges}$. Der Hintergrund dieser Ergebnisse entspricht demjenigen der Ergebnisse in I. | | | | |

Das Ausführungsbeispiel B2 kann in völlig entsprechender Weise durchgeführt werden, wenn man in den Siebeinlegern die Spaltblechsiebe mit rechteckigen Sieböffnungen durch solche mit Langlochöffnungen gemäß Figur 8 ersetzt. Dabei können die beiden Unterkornsiebeinleger folgende Ausgestaltung des Spaltblechsiebs aufweisen:

C = 5,7 mm; L = 14,0 mm; a = 6,2 mm; b = 5,4 mm; d = 1 mm; F = 38,7 %.

Der Überkornsiebeinleger kann dabei folgende Ausgestaltung des Spaltblechsiebs aufweisen:

C=8,8mm; L = 16 mm; a = 5,3 mm; b = 5,1 mm; d = 1 mm; F = 49,3 %.

Sowohl im Fall der Unterkornsiebeinleger als auch im Fall des Überkornsiebeinlegers ist der DIN-Werkstoff (Stahl) 1.4541 der bevorzugte. Als Alternative eignet sich auch der DIN-Werkstoff 1.4571.

Der Blindboden ist aus dem selben Material gefertigt und weist quadratische Sieböffnungen 10 mm x 10 mm in einer Spaltblechsiebausgestaltung (d = 1 mm) mit Stegbreiten von 2,9 mm auf allen Seiten einer Sieböffnung auf.

Figur 19 zeigt einen Ausschnitt eines solchen Unterkornsiebeinlegers von oben.

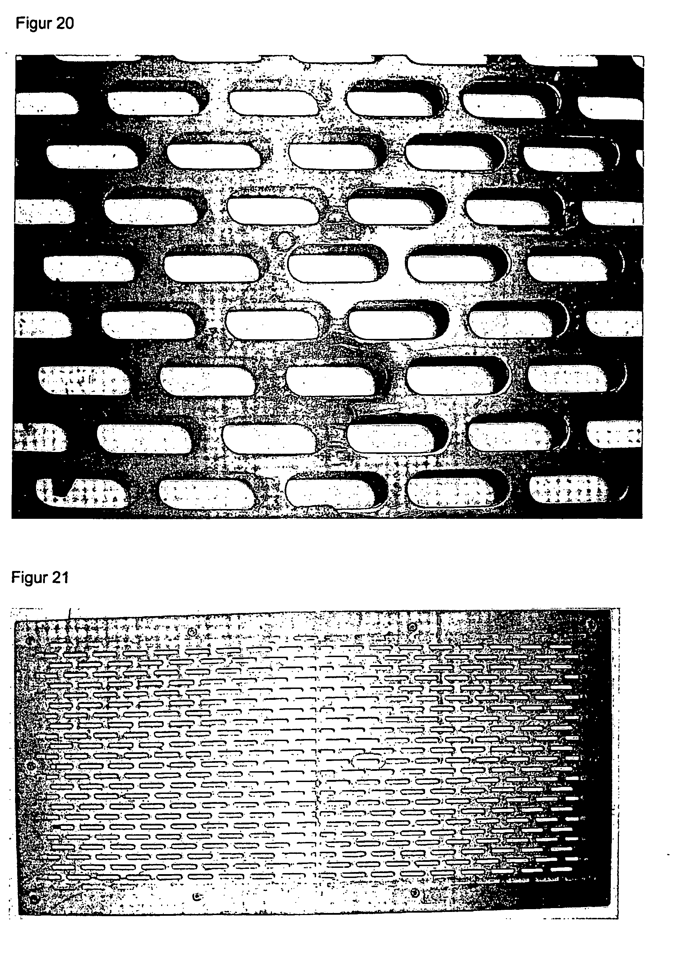

Figur 20 zeigt einen Ausschnitt eines solchen Überkornsiebes.

III. Wie in Beispiel 1 der WO 03/078310 beschrieben wurde ein ringförmiger Vollkatalysatorformkörper mit der im vorgenannten Beispiel 1 entsprechenden Vanadium, Phosphor, Eisen und Sauerstoff umfassenden Multielementoxidaktivmasse jedoch mit der Ringgeometrie A x I x L = 6,6 mm x 3,7 mm x 4,2 mm hergestellt. Nach Abkühlung des calcinierten Calcinationsgutes in einer in den Bandcalcinierer integrierten Kühlzone auf eine Temperatur von 60 °C wurde selbiges wie in I. der in I. beschriebenen Siebung zugeführt. Bandcalcinierer und Siebmaschine waren über ein Zellenrad getrennt, das verhinderte, dass zu große $H_2O/N_2$-Mengen vom Bandcalcinierer auf dem Weg des Calcinationsgutes zur Siebung ausgelassen wurden. Die nachfolgende Tabelle 3 weist die in Abhängigkeit von den Sieböffnungsparametern C und L der beiden Unterkorneinleger gemäß Figur 2 erzielten Ergebnisse aus. Das einen Innendurchmesser von 21 mm und eine Länge von 6,00 m aufweisende Reaktionsrohr wurde stets nur mit dem bei der Überkornabtrennung anfallenden Siebdurchgang beschickt. Die Druckverlustbestimmung erfolgte wie in I., jedoch mittels eines Luftstromes von 4142 NI/h.

Tabelle 3

|  | C (mm) | L (mm) | $m_U/m_{Ges}$ (Gew.-%) | $\Delta p$ (mbar) |
|---|---|---|---|---|
| B4 | 3,5 | 20 | 0,66 | 544 |
| V9 (A > C > B und L = C) | 6,0 | 6,0 | 1,5 | 561 |
| V10 (A > C > B und L > C) | 6,0 | 12 | 31,4 | 522 |
| V11 (C< (A-I)/2) | 1,0 | 20 | 0,45 | 581 |

(fortgesetzt)

| | C (mm) | L (mm) | $m_U/m_{Ges}$ (Gew.-%) | $\Delta p$ (mbar) |
|---|---|---|---|---|
| V12 (ungesiebt) | - | - | 0 | 634 |

B4 erzielte das zweitbeste Ergebnis für $\Delta p$ bei vergleichsweise geringem $m_U/m_{Ges}$. Der Hintergrund dieser Ergebnisse entspricht demjenigen der Ergebnisse in I.

Das Ausführungsbeispiel B4 kann in völlig entsprechender Weise durchgeführt werden, wenn man in den Siebeinlegern die Spaltblechsiebe mit rechteckigen Sieböffnungen durch solche mit Langlochöffnungen gemäß Figur 8 ersetzt. Dabei können die beiden Unterkornsiebeinleger folgende Ausgestaltung des Spaltblechsiebs aufweisen:

C = 3,3 mm; L = 16,3 mm; a = 4,1 mm; b = 5,6 mm; d = 1 mm; F = 32,3 %.

Der Überkornsiebeinleger kann dabei folgende Ausgestaltung des Spaltblechsiebs aufweisen:

C = 9,7 mm; L = 16,3 mm; a = 4,1 mm; b = 5,6 mm; d = 1 mm, F = 42,0 %.

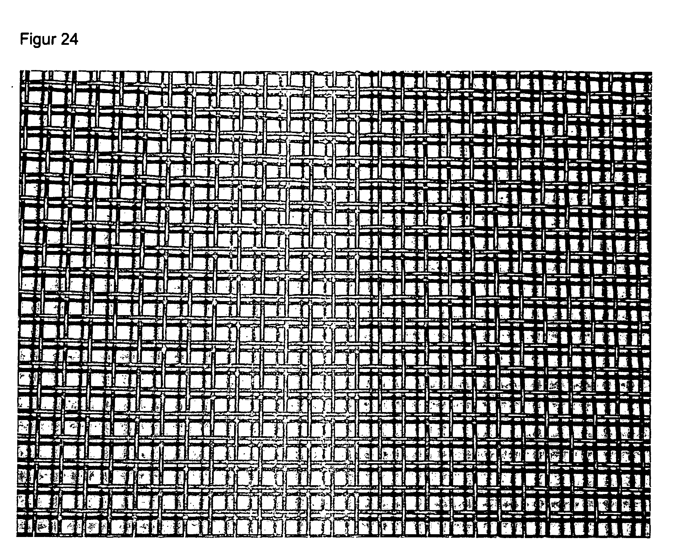

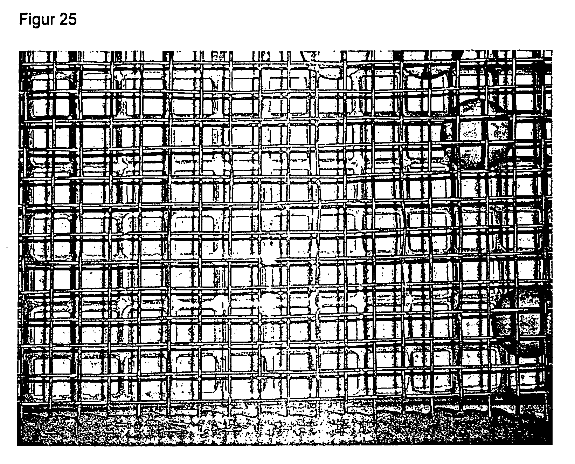

Sowohl im Fall der Unterkornsiebeinleger als auch im Fall des Überkornsiebeinlegers ist der DIN-Werkstoff (Stahl) 1.4541 der bevorzugte. Als Alternative eignet sich auch der DIN-Werkstoff 1.4571. Der Blindboden ist aus dem selben Material gefertigt und weist quadratische Sieböffnungen 10 mm x 10 mm in einer Spaltblechsiebausgestaltung (d = 1 mm) mit Stegbreiten von 2,9 mm auf allen Seiten einer Sieböffnung auf. Figur 21 zeigt einen solchen Unterkornsiebeinleger von oben.

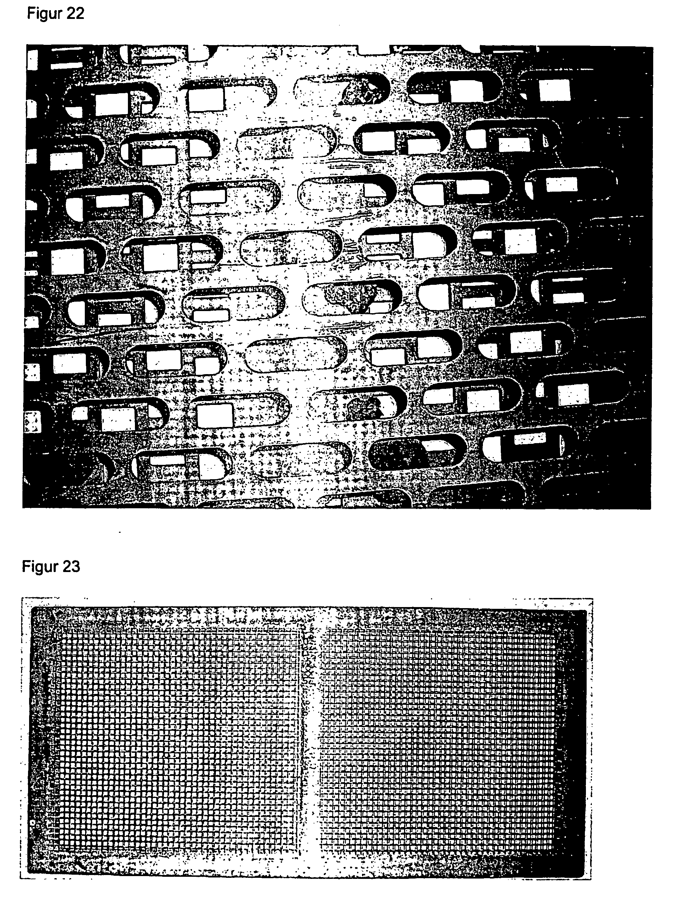

Figur 22 zeigt einen Ausschnitt eines solchen Überkornsiebeinlegers.
Wird der in Beispiel 1 der WO 03/078310 beschriebene ringförmige Vollkatalysatorformkörper mit der Ringgeometrie A x I x B = 5,5 mm x 3 mm x 3 mm hergestellt, wird man der Lehre des Standes der Technik folgend ein Siebgewebe gemäß Figur 5, jedoch mit quadratischen Sieböffnungen einsetzen. Für die Unterkornsiebeinleger kann die quadratische Sieböffnung z. B. 4 mm x 4 mm betragen (bei einer Dicke des verwobenen Drahtes von 0,95 mm). Auf einer Gesamtfläche von 100 cm$^2$ befinden sich dann 360 Sieböffnungen. Für den Überkornsiebeinleger kann die quadratische Sieböffnung z. B. 5,9 mm x 5,9 mm betragen (bei einer Dicke des verwobenen Drahtes von 1,0 mm). Auf einer Gesamtfläche von 100 cm$^2$ befinden sich dann 182 Sieböffnungen. Der verwobene Draht kann sowohl aus DIN-Werkstoff 1.4541 als auch DIN-Werkstoff 1.4571 gefertigt sein. Der Blindboden kann dabei stets als Spaltblechsieb mit quadratischen Sieböffnungen 10 mm x 10 mm (d = 1 mm) sowie einer Stegbreite von 2,9 mm auf allen Seiten einer Sieböffnung aus dem selben Material gefertigt sein. Figur 23 zeigt einen solchen Unterkornsiebeinleger gemäß der Lehre des Standes der Technik von oben. Figur 24 zeigt einen Ausschnitt des zugehörigen Siebes. Figur 25 zeigt einen Ausschnitt eines solchen Überkornsiebeinlegers gemäß der Lehre des Standes der Technik von oben.
Allerdings ist eine solche Vorgehensweise mit den in dieser Schrift beschriebenen Nachteilen verbunden.
D. h., bevorzugt wird man auch in diesem Fall Siebe mit erfindungsgemäßen Sieböffnungen (z. B. mit entsprechenden Rechteck- oder Langlochöffnungen) anwenden, z. B. dasjenige aus B1, Tabelle 1 dieser Schrift.
US Provisional Patent Application No. 60/944208, eingereicht am 15.06.07, ist eingefügt in die vorliegende Anmeldung durch Literaturhinweis. Im Hinblick auf die obengenannten Lehren sind zahlreiche Änderungen und Abweichungen von der vorliegenden Erfindung möglich. Man kann deshalb davon ausgehen, dass die Erfindung, im Rahmen der beigefügten Ansprüche, anders als hierin spezifisch beschrieben, ausgeführt werden kann.

**Patentansprüche**

1. Verfahren zum Beschicken eines Reaktors mit einem Katalysatorfestbett, das wenigstens Katalysatorformkörper K umfasst, deren geometrische Form diejenige eines Ringes mit dem Außendurchmesser A, dem Innendurchmesser I und der Höhe B mit der Maßgabe A ≥ B ist, bei dem man vor der Beschickung bei der Herstellung der Katalysatorformkörper K entstandene Bruchstücke durch ein Verfahren der Siebung wenigstens teilweise als Siebdurchgang von einem Katalysatorformkörper K enthaltenden Siebrückstand abtrennt sowie anschließend von dem Siebrückstand zum Beschicken des Katalysatorfestbetts einsetzt und dabei das Verfahren der Siebung mit Hilfe eines Siebes durchführt, das Sieböffnungen aufweist, deren geschlossene Umrisslinie jeweils wenigstens zwei geradlinige Abschnitte aufweist, die sich im Abstand C über wenigstens eine Länge L wie zwei parallele Seiten eines Rechtecks mit den Seitenlängen L und C mit der Maßgabe gegenüberstehen, dass jede durch einen auf der Umrisslinie einer Sieböffnung liegenden Umrisslinienpunkt P verlaufende Parallele zur gedachten Rechteckseite mit der Seitenlänge C keinen weiteren auf der Umrisslinie liegenden Punkt aufweist, dessen Abstand zum Umrisslinienpunkt P > C beträgt, **dadurch** gekenntzeichnet, dass beim Verfahren der Siebung die Relationen I,

$$L > A \geq B > C \geq (A-I)/2 \qquad\qquad (I),$$

erfüllt sind.

2. Verfahren nach Anspruch 1, **dadurch gekennzeichnet, dass** beim Verfahren der Siebung die Relationen II,

$$L > A \geq B > C \geq B/2 \geq (A-I)/2 \qquad\qquad (II),$$

erfüllt sind.

3. Verfahren nach Anspruch 1, **dadurch gekennzeichnet, dass** beim Verfahren der Siebung die Relationen VI,

$$L > A \geq B > 0{,}9B \geq C \geq (A-I)/2 \qquad (VI),$$

erfüllt sind.

4. Verfahren nach Anspruch 1, **dadurch gekennzeichnet, dass** beim Verfahren der Siebung die Relationen III,

$$L > A \geq B > 0{,}9B > C \geq B/2 \geq (A-I)/2 \qquad (III),$$

erfüllt sind.

5. Verfahren nach Anspruch 1, **dadurch gekennzeichnet, dass** beim Verfahren der Siebung die Relationen V,

$$L > A \geq B > 0{,}86B \geq C \geq B/2 \geq (A-I)/2 \qquad (V),$$

erfüllt sind.

6. Verfahren nach einem der Ansprüche 1 bis 5, **dadurch gekennzeichnet, dass** $L \geq 1{,}5 \cdot A$ beträgt.

7. Verfahren nach einem der Ansprüche 1 bis 5, **dadurch gekennzeichnet, dass** $L \geq 2 \cdot A$ beträgt.

8. Verfahren nach einem der Ansprüche 1 bis 5, **dadurch gekennzeichnet, dass** $L \geq 2{,}5 \cdot A$ beträgt.

9. Verfahren nach einem der Ansprüche 1 bis 8, **dadurch gekennzeichnet, dass** $L \leq 20 \cdot A$ beträgt.

10. Verfahren nach einem der Ansprüche 1 bis 9, **dadurch gekennzeichnet, dass** die geschlossene Umrisslinie der Sieböffnungen ein Rechteck mit den Seitenlängen L und C bildet.

11. Verfahren nach einem der Ansprüche 1 bis 9, **dadurch gekennzeichnet, dass** die geschlossene Umrisslinie der Sieböffnungen ein Langloch bildet, das die Kantenlänge L und die Lochweite C aufweist.

12. Verfahren nach einem der Ansprüche 1 bis 11, **dadurch gekennzeichnet, dass** als Sieb ein Spaltblech verwendet wird.

13. Verfahren nach einem der Ansprüche 1 bis 12, **dadurch gekennzeichnet, dass** die Siebung mit einem Plansieb durchgeführt wird.

14. Verfahren nach einem der Ansprüche 1 bis 13, **dadurch gekennzeichnet, dass** die Siebung mit einem linearen Planschwingsieb durchgeführt wird.

15. Verfahren nach einem der Ansprüche 1 bis 14, **dadurch gekennzeichnet, dass** der Reaktor ein Rohrbündelreaktor ist, dessen Rohre mit dem Katalysatorfestbett beschickt werden.

16. Verfahren nach einem der Ansprüche 1 bis 15, **dadurch gekennzeichnet, dass** A 2 bis 10 mm und (A-I)/2 1 bis 3 mm beträgt.

17. Verfahren nach einem der Ansprüche 1 bis 16, **dadurch gekennzeichnet, dass** die Katalysatorformkörper K Multielementoxidvollkatalysatoren sind.

18. Verfahren nach einem der Ansprüche 1 bis 17, **dadurch gekennzeichnet, dass** sich ein Verfahren der heterogen katalysierten partiellen Gasphasenoxidation einer organischen Verbindung im mit dem Katalysatorfestbett beschickten Reaktor anschließt.

19. Verfahren nach Anspruch 18, **dadurch gekennzeichnet, dass** die heterogen katalysierte partielle Gasphasenoxidation eine heterogen katalysierte partielle Gasphasenoxidation von Ethylen, von Ethan, von Methanol, von Propylen, von Propan, von Acrolein, von Methacrolein, von 1-Buten, von 2-Buten, von iso-Buten, von iso-Butan, von n-Butan, von Butadien oder von o-Xylol ist.

20. Verfahren nach einem der Ansprüche 1 bis 19, **dadurch gekennzeichnet, dass** die Seitendruckfestigkeit der Katalysatorformkörper K bis zu 20 N beträgt.

21. Verfahren zur wenigstens teilweisen Abtrennung von Bruchstücken, die bei der Herstellung von Katalysatorformkörpern K, deren geometrische Form diejenige eines Ringes mit dem Außendurchmesser A, dem Innendurchmesser I und der Höhe B mit der Maßgabe $A \geq B$ ist, entstanden sind, aus einem Gemisch aus ringförmigen Katalysatorformkörpern K und diesen Bruchstücken, als Siebdurchgang bei einem Verfahren der Siebung dieses Gemischs mit Hilfe eines Siebes, das Sieböffnungen aufweist, deren geschlossene Umrisslinie jeweils wenigstens zwei geradlinige Abschnitte aufweist, die sich im Abstand C über wenigstens eine Länge L wie zwei parallele Seiten eines Rechtecks mit den Seitenlängen L und C mit der Maßgabe gegenüberstehen, dass jede durch einen auf der Umrisslinie einer Sieböffnung liegenden Umrisslinienpunkt P verlaufende Parallele zur gedachten Rechteckseite mit der Seitenlänge C keinen weiteren auf der Umrisslinie liegenden Punkt aufweist, dessen Abstand zum Umrisslinienpunkt P > C beträgt, **dadurch gekennzeichnet, dass** beim Verfahren der Siebung die Relationen I,

$$L > A \geq B > C \geq (A\text{-}I)/2 \qquad (I),$$

erfüllt sind.

22. Verwendung von dem bei einem Verfahren gemäß Anspruch 21 anfallenden Siebrückstand zum Beschicken eines Reaktors mit einem Katalysatorfestbett.

**Claims**

1. A process for charging a reactor with a fixed catalyst bed which comprises at least one shaped catalyst body K whose geometric shape is that of a ring with the external diameter E, the internal diameter I and the height H where $E \geq H$, in which, before the charging, fragments formed in the preparation of the shaped catalyst bodies K are removed at least partly as material which passes through the screen from a screen residue comprising shaped catalyst bodies K by a process for screening, and then the screen residue is used to charge the fixed catalyst bed and the process for screening is performed with the aid of a screen which has screen orifices whose continuous outline has in each case at least two straight-line sections which are opposite one another at a distance C over at least one length L like two parallel sides of a rectangle with the side lengths L and C, with the proviso that each line which runs through an outline point P lying on the outline of a screen orifice and parallel to the theoretical rectangle side with the side length C does not have any further point lying on the outline whose distance from the outline point P > C, wherein, in the process for screening, the relations I,

$$L > E \geq H > C \geq (E-I)/2 \qquad (I),$$

are satisfied.

2. The process according to claim 1, wherein, in the process for screening, the relations II,

$$L > E \geq H > C \geq H/2 \geq (E-I)/2 \qquad (II),$$

are satisfied.

3. The process according to claim 1, wherein, in the process for screening, the relations VI,

$$L > E \geq H > 0.9H \geq C \geq (E-I)/2 \qquad (VI),$$

are satisfied.

4. The process according to claim 1, wherein, in the process for screening, the relations III,

$$L > E \geq H > 0.9H > C \geq H/2 \geq (E-I)/2 \qquad (III),$$

are satisfied.

5. The process according to claim 1, wherein, in the process for screening, the relations V,

$$L > E \geq H > 0.86H \geq C \geq H/2 \geq (E-I)/2 \qquad (V),$$

are satisfied.

6. The process according to any of claims 1 to 5, wherein $L \geq 1.5 \cdot E$.

7. The process according to any of claims 1 to 5, wherein $L \geq 2 \cdot E$.

8. The process according to any of claims 1 to 5, wherein $L \geq 2.5 \cdot E$.

9. The process according to any of claims 1 to 8, wherein L ≤ 20 · E.

10. The process according to any of claims 1 to 9, wherein the continuous outline of the screen orifices forms a rectangle with the side lengths L and C.

11. The process according to any of claims 1 to 9, wherein the continuous outline of the screen orifices forms an elongated hole which has the edge length L and the hole width C.

12. The process according to any of claims 1 to 11, wherein the screen used is a slotted sheet.

13. The process according to any of claims 1 to 12, wherein the screening is performed with a planar screen.

14. The process according to any of claims 1 to 13 , wherein the screening is performed with a linear planar vibrating screen.

15. The process according to any of claims 1 to 14, wherein the reactor is a tube bundle reactor whose tubes are charged with the fixed catalyst bed.

16. The process according to any of claims 1 to 15, wherein E is from 2 to 10 mm and (E-I)/2 is from 1 to 3 mm.

17. The process according to any of claims 1 to 16, wherein the shaped catalyst bodies K are unsupported multielement oxide catalysts.

18. The process according to any of claims 1 to 17, which is followed by a process for heterogeneously catalyzed partial gas phase oxidation of an organic compound in the reactor charged with the fixed catalyst bed.

19. The process according to claim 18, wherein the heterogeneously catalyzed partial gas phase oxidation is a heterogeneously catalyzed partial gas phase oxidation of ethylene, of ethane, of methanol, of propylene, of propane, of acrolein, of methacrolein, of 1-butene, of 2-butene, of isobutene, of isobutane, of n-butane, of butadiene or of o-xylene.

20. The process according to any of claims 1 to 19, wherein the side crushing strength of the shaped catalyst bodies K is up to 20 N.

21. A process for at least partly removing fragments which have formed in the preparation of shaped catalyst bodies K whose geometric form is that of a ring with the external diameter E, the internal diameter I and the height H with the proviso that E ≥ H from a mixture of annular shaped catalyst bodies K and these fragments as material which passes through the screen in a process for screening this mixture with the aid of a screen which has screen orifices whose continuous outline has in each case at least two straight-line sections which are opposite one another at a distance C over at least one length L like two parallel sides of a rectangle with the side lengths L and C, with the proviso that each line which runs through an outline point P lying on the outline of a screen orifice and parallel to the theoretical rectangle side with the side length C does not have any further point lying on the outline whose distance from the outline point P > C, wherein, in the process for screening, the relations I,

$$L > E \geq H > C \geq (E-I)/2 \qquad (I),$$

are satisfied.

22. The use of the screen residue obtained in a process according to claim 21 for charging a reactor with a fixed catalyst bed.

**Revendications**

1. Procédé de chargement d'un réacteur avec un lit fixe de catalyseur qui comprend au moins des corps moulés de catalyseur K, dont la forme géométrique est celle d'un anneau de diamètre externe A, de diamètre interne I et de hauteur B, à condition que A ≥ B, selon lequel, avant le chargement, des débris formés lors de la fabrication des corps moulés de catalyseur K sont séparés au moins partiellement d'un résidu de tamisage contenant des corps moulés de catalyseur K sous la forme d'une fraction de tamisage par un procédé de tamisage et utilisés après le résidu de tamisage pour le chargement du lit fixe de catalyseur, le procédé de tamisage étant réalisé à l'aide d'un tamis qui comprend des ouvertures de tamisage dont le contour fermé comprend à chaque fois au moins deux sections droites, qui se font face à la distance C sur moins une longueur L, tels deux côtés parallèles d'un rectangle de longueurs de côté L et C, à condition que chaque parallèle au côté de rectangle imaginaire de longueur de côté C passant par un point de contour P situé sur le contour d'une ouverture de tamisage ne comporte aucun autre point situé sur le contour dont la distance au point de contour P > C, **caractérisé en ce que** lors du procédé de tamisage, les relations I,

$$L > A \geq B > C \geq (A-I)/2 \quad (I),$$

2. Procédé selon la revendication 1, **caractérisé en ce que** lors du procédé de tamisage, les relations II,

$$L > A \geq B > C \geq B/2 \geq (A-I)/2 \quad (II),$$

sont satisfaites.

3. Procédé selon la revendication 1, **caractérisé en ce que** lors du procédé de tamisage, les relations VI,

$$L > A \geq B > 0,9B \geq C \geq (A-I)/2 \quad (VI),$$

sont satisfaites.

4. Procédé selon la revendication 1, **caractérisé en ce que** lors du procédé de tamisage, les relations III,

$$L > A \geq B > 0,9B > C \geq B/2 \geq (A-I)/2 \quad (III),$$

sont satisfaites.

5. Procédé selon la revendication 1, **caractérisé en ce que** lors du procédé de tamisage, les relations V,

$$L > A \geq B > 0,86B \geq C \geq B/2 \geq (A-I)/2 \quad (V),$$

sont satisfaites.

6. Procédé selon l'une quelconque des revendications 1 à 5, **caractérisé en ce que** L ≥ 1,5 · A.

7. Procédé selon l'une quelconque des revendications 1 à 5, **caractérisé en ce que** L ≥ 2 · A.

8. Procédé selon l'une quelconque des revendications 1 à 5, **caractérisé en ce que** L ≥ 2,5 · A.

9. Procédé selon l'une quelconque des revendications 1 à 8, **caractérisé en ce que** L ≤ 20 · A.

**10.** Procédé selon l'une quelconque des revendications 1 à 9, **caractérisé en ce que** le contour fermé des ouvertures de tamisage forme un rectangle de longueurs de côté L et C.

**11.** Procédé selon l'une quelconque des revendications 1 à 9, **caractérisé en ce que** le contour fermé des ouvertures de tamisage forme une fente allongée qui présente la longueur de bord L et la largeur de fente C.

**12.** Procédé selon l'une quelconque des revendications 1 à 11, **caractérisé en ce qu'**une tôle à fentes est utilisée en tant que tamis.

**13.** Procédé selon l'une quelconque des revendications 1 à 12, **caractérisé en ce que** le tamisage est réalisé avec un tamis plan.

**14.** Procédé selon l'une quelconque des revendications 1 à 13, **caractérisé en ce que** le tamisage est réalisé avec un tamis oscillant plan linéaire.

**15.** Procédé selon l'une quelconque des revendications 1 à 14, **caractérisé en ce que** le réacteur est un réacteur à faisceau de tubes dont les tubes sont chargés avec le lit fixe de catalyseur.

**16.** Procédé selon l'une quelconque des revendications 1 à 15, **caractérisé en ce que** A est de 2 à 10 mm et (A-I)/2 de 1 à 3 mm.

**17.** Procédé selon l'une quelconque des revendications 1 à 16, **caractérisé en ce que** les corps moulés de catalyseur K sont des catalyseurs entiers d'oxyde de plusieurs éléments.

**18.** Procédé selon l'une quelconque des revendications 1 à 17, **caractérisé en ce qu'**un procédé d'oxydation partielle en phase gazeuse sous catalyse hétérogène d'un composé organique dans le réacteur chargé avec le lit fixe de catalyseur s'ensuit.

**19.** Procédé selon la revendication 18, **caractérisé en ce que** l'oxydation partielle en phase gazeuse sous catalyse hétérogène est une oxydation partielle en phase gazeuse sous catalyse hétérogène d'éthylène, d'éthane, de méthanol, de propylène, de propane, d'acroléine, de méthacroléine, de 1-butène, de 2-butène, d'iso-butène, d'iso-butane, de n-butane, de butadiène ou de o-xylène.

**20.** Procédé selon l'une quelconque des revendications 1 à 19, **caractérisé en ce que** la résistance à la pression latérale des corps moulés de catalyseur K est jusqu'à 20 N.

**21.** Procédé de séparation au moins partielle de débris qui sont formés lors de la fabrication de corps moulés catalytiques K, dont la forme géométrique est celle d'un anneau de diamètre externe A, de diamètre interne I et de hauteur B, à condition que A ≥ B, à partir d'un mélange de corps moulés de catalyseur K annulaires et de ces débris, sous la forme d'une fraction de tamisage lors d'un procédé de tamisage de ce mélange à l'aide d'un- tamis qui comporte des ouvertures de tamisage dont le contour fermé comprend à chaque fois au moins deux sections droites, qui se font face à la distance C sur moins une longueur L, tels deux côtés parallèles d'un rectangle de longueurs de côté L et C, à condition que chaque parallèle au côté de rectangle imaginaire de longueur de côté C passant par un point de contour P situé sur le contour d'une ouverture de tamisage ne comporte aucun autre point situé sur le contour dont la distance au point de contour P > C, **caractérisé en ce que** lors du procédé de tamisage, les relations I,

$$L > A \geq B > C \geq (A-I)/2 \quad (I),$$

sont satisfaites.

**22.** Utilisation du résidu de tamisage formé lors d'un procédé selon la revendication 21 pour le chargement d'un réacteur avec un lit fixe de catalyseur.

Figur 1

Figur 2

Figur 3

Figur 4

Figur 5

EP 2 162 216 B1

Figur 6

Figur 7

28

Figur 8

Figur 9

Figur 10

Figur 11

Figur 13

Figur 12

Figur 14

Figur 15

Figur 16

Figur 17

Figur 18

Figur 19

Figur 20

Figur 21

Figur 22

Figur 23

Figur 24

Figur 25

# EP 2 162 216 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 4431949 A
- DE 2903582 A
- EP 700714 A
- DE PS2830765 C
- DE 102004017151 A
- DE 102004017150 A
- DE 10361515 A
- DE 10031347 A
- DE 102006029790 A
- DE 102006017623 A
- WO 200503039 A
- US 7147011 B
- US 7147011 A
- EP 1726358 A
- CH 449600 A
- CH 38828 A
- DE 2351151 A
- DE 2526238 A
- EP 092097 A
- EP 058927 A
- DE 4132263 A
- DE 4132684 A
- DE 4022212 A
- EP 522871 A
- DE 2106796 A
- DE 1624921 A
- GB 1464198 A
- GB 1291354 A
- DE 2025430 A
- EP 352849 A
- EP 352850 A
- EP 532325 A
- US 5155242 A
- US 5262551 A
- DE S1254137 A
- DE 2159346 A
- EP 372972 A
- WO 8907101 A
- DE 4311608 A
- DE 10131297 A
- EP 1090684 A
- EP 608838 A
- DE 10046672 A
- EP 529853 A
- WO 0196270 A
- DE 10028582 A
- US 20050263926 A
- WO 2005030393 A
- EP 1243331 A
- US 20060205978 A
- WO 0230569 A
- DE 102007005602 A
- DE 102007004961 A
- DE 2201528 A
- DE 2231557 A
- DE 2310517 A
- DE 2830765 C
- DE 2513405 C
- US 3147084 A
- EP 383224 A
- EP 468290 A
- WO 03059857 A
- WO 03057653 A
- EP 873783 A
- EP 1270065 A
- US 20060161019 A
- EP 979813 A
- EP 090744 A
- EP 456837 A
- EP 1106598 A
- US 5198581 A
- US 4203903 A
- DE 102007005606 A
- EP 467144 A
- EP 1060792 A
- DE 19855913 A
- WO 0168245 A
- WO 03078310 A
- DE 102005035978 A
- DE 102005037678 A
- WO 0378059 A
- DE 19922113 A
- WO 0224620 A
- WO 02062737 A
- US 20050131253 A
- DE 102004023249 A
- DE 67059
- DE 102004025445 A
- DE 10350822 A
- DE 102007010422 A
- EP 714700 A
- US 6528683 A
- US 6586361 A
- US 6362345 A
- EP 496470 A
- EP 619142 A
- EP 624398 A

- EP 804289 A
- EP 937498 A

- DE 10048957 A
- US 60944208 P

**In der Beschreibung aufgeführte Nicht-Patentliteratur**

- *Aufbereitungs-Technik,* 1960, vol. 11, 457-473
- *Chem.-Ing.-Techn.,* 1984, vol. 56 (12), 897-907
- **Paul Schmidt et al.** Sieben und Siebmaschinen. Wiley-VCH GmbH & Co. KGaA, 2003

- *Chem.-Ing.-Tech.,* 1984, vol. 56 (12), 897-907
- **Paul Schmidt.** Sieben und Siebmaschinen, Grundlagen und Anwendung. Wiley VCH, 2003
- *Chem.-Ing.-Tech.,* 1984, vol. 56 (12), 902
- *Schüttgut,* 2003, vol. 9 (4), 272, 273